(19) Europäisches Patentamt
European Patent Office
Office européen des brevets

(11) EP 2 933 299 A1

(12) **EUROPÄISCHE PATENTANMELDUNG**

(43) Veröffentlichungstag:
**21.10.2015 Patentblatt 2015/43**

(21) Anmeldenummer: **15162391.5**

(22) Anmeldetag: **02.04.2015**

(51) Int Cl.:
***C09D 133/02*** (2006.01) ***C09J 7/02*** (2006.01)
***C09J 133/02*** (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA**

(30) Priorität: **16.04.2014 DE 102014207364**

(71) Anmelder: **TESA SE**
**20253 Hamburg (DE)**

(72) Erfinder:
- **Auktun, Inga**
  **22844 Norderstedt (DE)**
- **Beschmann, Jennifer**
  **215026 Suzhou (CN)**
- **Prenzel, Dr. Alexander**
  **22529 Hamburg (DE)**
- **Siebert, Dr. Michael**
  **22869 Schenefeld (DE)**

(54) **KLEBEMASSEN, UV-VERNETZBARE HAFTKLEBEMASSEN SOWIE HAFTMITTEL MIT UV-VERNETZTEN HAFTKLEBEMASSEN**

(57) Die Erfindung betrifft Klebemassen und Haftklebemassen umfassend Polymerisationsprodukte von Acrylaten, wobei die Massen schmelzbar sind und Polymerisationsprodukte von Estern der (Meth-)acrylsäure und (Meth-)acrylsäure umfassen, wobei das Molekulargewicht des Polymerisationsproduktes Mn größer 50.000 g/Mol ist und Mw größer 500.000 g/Mol ist. Ferner betrifft die Erfindung UV-vernetzbare und schmelzbare Haftklebemassen sowie ein Verfahren zu deren Herstellung als auch die Herstellung von Haftmitteln, wie Kabelwickelbänder.

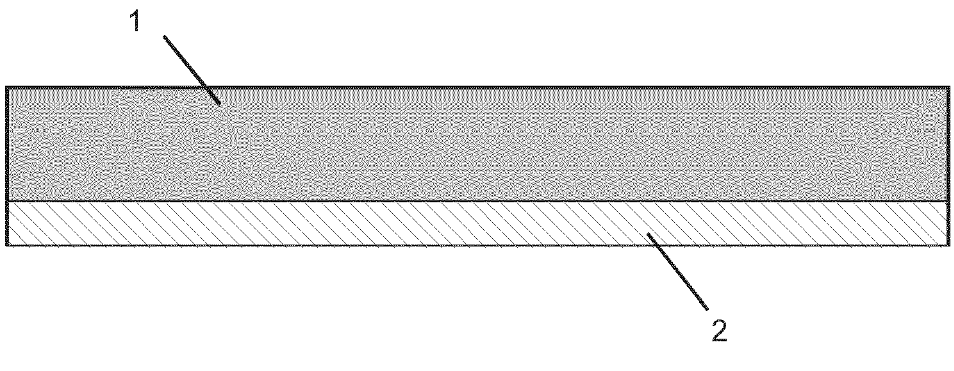


Fig. 1



Printed by Jouve, 75001 PARIS (FR)

## Beschreibung

Die Erfindung betrifft Klebemassen und Haftklebemassen umfassend Polymerisationsprodukte von Acrylaten, wobei die Massen schmelzbar sind und Polymerisationsprodukte von Estern der (Meth-)acrylsäure und (Meth-)acrylsäure umfassen, wobei das Molekulargewicht des Polymerisationsproduktes Mn größer 50.000 g/Mol ist und Mw größer 500.000 g/Mol ist. Ferner betrifft die Erfindung UV-vernetzbare und schmelzbare Haftklebemassen sowie ein Verfahren zu deren Herstellung als auch die Herstellung von Haftmitteln, wie Kabelwickelbänder.

Seit langem finden in der Industrie Klebebänder zur Herstellung von Kabelbäumen Verwendung. Dabei dienen die Klebebänder zum Bündeln einer Vielzahl von elektrischen Leitungen vor dem Einbau oder in bereits montiertem Zustand, um den Raumbedarf des Leitungsbündels durch Bandagieren zu reduzieren sowie um zusätzliche Schutzfunktionen zu erzielen.

Die Prüfung und Klassifizierung von Klebebändern für die Kabelummantelung erfolgt in der Automobilindustrie nach umfangreichen Normenwerken, wie zum Beispiel der LV 312-1, "Schutzsysteme für Leitungssätze in Kraftfahrzeugen, Klebebänder; Prüfrichtlinie" (10/2009) als gemeinsame Norm der Firmen Daimler, Audi, BMW und Volkswagen oder der Ford-Spezifikation ES-XU5T-1A303-aa (Revision 09/2009) "Harness Tape Performance Specification).

Verbreitet sind Kabelwickelbänder mit Folien- und Textilträger, die in der Regel einseitig mit unterschiedlichen Haftklebemassen beschichtet sind. Neben einer Reihe an Anforderungen, wie Chemikalienverträglichkeit, hohe Klebkraft, Verträglichkeit mit wechselnden Untergründen, die an Klebebänder gestellt werden, müsse in der Automobilindustrie zudem unebene, ungleichmäßige Untergründe durch die Kabelstränge, Wellrohre und Abzweigungen zuverlässig verklebt werden. Dazu kommen noch Biege- und Zugbeanspruchung bei der Herstellung, dem Einbau und der späteren Nutzung im Motorraum eines Automobils oder auch in der Karosserie mit ständiger Biegebeanspruchung beim Öffnen von Türen.

Da das Ende des Klebebandes im Idealfall auf der eigenen Rückseite verklebt wird, muss eine gute Sofortklebkraft (Tack) auf diesem Untergrund vorhanden sein, damit nicht zu Beginn ein Abflaggen des Klebebandes auftritt. Um dauerhaft ein Flagging freies Produkt zu gewährleisten, müssen die Verankerung auf dem Untergrund und die innere Festigkeit der Klebemasse soweit ausgeprägt sein, dass die Klebeverbindung auch unter dem Einfluss von Spannung (Zug- und Biegebeanspruchung) Bestand hat.

Unter Flagging wird - bei einem um einen Körper gewickelten Klebeband - die Neigung eines Klebebandendes abzustehen verstanden. Die Ursache ergibt sich aus der Kombination von Haltekraft durch den Klebstoff, der Steifigkeit des Trägers und dem Durchmesser des Kabelsatzes.

Der Nachweis der Flaggingbeständigkeit von Wire Harnessing (WH)-Kabelwickelbändern wird über die TFT-Methode (Threshold Flagging Time) geführt. Als Zielgröße für ein einwandfrei flaggingfreies Gewebeprodukt wird dabei ein Grenzwert von deutlich über 1000 min TFT, vorzugsweise über 2000 min TFT, definiert.

Die Realisierung von leicht abrollbaren WH-Klebebändern unter gleichzeitiger Beibehaltung guter klebtechnischer Eigenschaften stellt eine große Herausforderung dar, weil beide Eigenschaften sich auszuschließen scheinen, denn die wesentlichen Kriterien bei einseitig klebenden Kabelwickelbändern, mit angepasster Abrollkraft und ausreichend hoher Klebkraft, stehen dabei in krassem Gegensatz zueinander. Während für gute Klebkraftwerte und ein damit verbundenes geringes Flaggingpotential ein gutes Auffließ- und Verankerungsverhalten der Haftklebemasse vorausgesetzt wird, sind diese Kriterien für ein angenehmes Abrollverhalten eher hinderlich.

Aus der EP 1 548 080 A1 sind technische Klebebänder mit einem Füllstoffgehalt von 10 % zur Verwendung im Bauwesen bekannt, die auf AcResin Polymeren mit einem Molekulargewicht von schätzungsweise um 200.000 g/mol sowie weiteren Zusätzen wie Flammschutzmitteln basieren. Es können bis zu 10 % Füllstoffe enthalten sein. Einen Hinweis auf eine Verwendbarkeit im Automobilbereich unter den vorgenannten Umgebungsbedingungen, wie der hohen Temperatur, findet sich nicht.

EP 1 370 590 B1 (WO 02/28963 A2) offenbart ein Verfahren zur Herstellung von hoch vernetzten Acrylatschmelzhaftklebern von Amid-funktionellen Acrylaten. Ferner wird ein Verfahren zur Herstellung einer UV-vernetzbaren Acrylatmasse offenbart.

Unter dem Handelsnamen AcResin sind unabgemischte Polyacrylate bekannt, deren Molekulargewichte Mw um 200.000 bis 300.000 g/Mol liegen. Hierdurch ist es erforderlich, durch die UV-Vernetzung eine genügend hohe Kohäsion erst zu ermöglichen, womit aber gleichzeitig die Adhäsion aufgrund des hohen Vernetzungsgrades erheblich sinkt.

Gerade in Hinblick auf das Flaggingverhalten ist es aber wichtig, eine Balance zwischen Kohäsion und Adhäsion einzustellen. Die unabgemischte AcResin Masse ist schon bei geringen UV-Dosen zu stark vernetzt, so dass das Prozessfenster sehr klein ist beziehungsweise Variationen des Produktes durch Veränderung der Maschinenparameter nicht möglich sind.

Um dies zu ermöglichen, ist bekannt, dass die AcResin zum Beispiel mit Harzen abgemischt wird.

Um die gewünschten Eigenschaften der Haftklebemassen einzustellen, können die bekannten Acrylatpolymere mit standardisierten Abmischungen versetzt werden. Ziel der abmischten Polymere ist es, die Adhäsion zu erhöhen.

Gleichzeitig gelingt es nicht, die Kohäsion signifikant zu verbessern. Dafür werden vorzugsweise Harze mit einem niedrigen Erweichungspunkt (zum Beispiel Kolophoniumharze) verwendet. Wegen des damit stark sinkenden Elastizitätsmoduls wird die Kohäsion der Masse herabgesetzt. Mit dem Ziel, die Kohäsion zu verbessern, werden zum Beispiel Harze mit einem sehr hohen Erweichungspunkt eingesetzt (zum Beispiel Terpenphenolharze mit einem Erweichungspunkt >115 °C), die zu einer Verbesserung der Kohäsion führen. Zwar wird das Elastizitätsmodul ebenfalls gesenkt, jedoch wird dies wiederum durch die stärker ansteigende Glasübergangstemperatur kompensiert. Gleichzeitig verschlechtert sich jedoch das Auffließverhalten aufgrund der hohen resultierenden Glasübergangstemperatur im Vergleich zur unabgemischten Masse. Damit wird es sehr schwierig, die zeitliche Konstanz der Balance aus Adhäsion und Kohäsion zu gewährleisten. Das ist für WH-Kabelwickelbänder, insbesondere für das Einstellen einer stabilen Abrollkraft, von hoher Bedeutung.

Die Auswahl der Harze ist ebenfalls stark eingeschränkt, da die meisten Harze im UV-Bereich absorbieren und somit höhere Dosen zur Erzielung eines gleichen Vernetzungsgrades benötigt werden. Dies ist von Nachteil, denn durch die höhere UV-Dosis kann der Temperatureintrag auf den Träger deutlich erhöht werden und damit ist gegebenenfalls eine aufwändige Kühlung notwendig, um ein Schrumpfen des Trägers zu vermeiden. Prozessbedingt kann es notwendig sein, dass die Bahngeschwindigkeit gesenkt werden muss, um die notwendige UV-Dosis zu erreichen beziehungsweise die thermische Energie abführen zu können. Harze mit hoher UV-Absorption können zu einem sehr starken Vernetzungsgradienten führen, womit die Verankerung auf dem Gewebe nicht mehr sichergestellt ist.

Eine weitere Möglichkeit der Modifizierung besteht in der Verwendung von Füllstoffen wie zum Beispiel Aerosil (pyrogene Kieselsäure). Mit diesen Füllstoffen kann die Kohäsion durch Füllstoff-Polymer-Wechselwirkung erhöht werden. Es ist mit sehr hohem technischem Aufwand verbunden, die Füllstoffe homogen einzuarbeiten. Wenn dies nicht erfüllt wird, ist der Nutzen der Füllstoffe nicht gegeben, da das System dann an Agglomeraten aufbrechen wird oder die spezifische Oberfläche nicht ausreichend groß genug ist, um genügend Polymerketten zu adsorbieren. Außerdem können Agglomerate zu einem inhomogenen oder rauen/streifigen Beschichtungsbild führen. Prinzipiell führen die Füllstoffe zu einer Verminderung der Klebkraft.

Die Aufgabe war es, Haftklebemassen zu entwickeln, die nahezu unabhängig vom Trägermaterial wie Gewebe-, Vlies-, oder Folienträger ein sehr gutes Flaggingverhalten aufzeigen. Gleichfalls sollen die Haftklebemassen entsprechend der Norm LV312 eine hohe Temperaturbeständigkeit aufweisen, vorzugsweise der Klasse T4 mit Werten von 3000 h bei 150 °C. Eine hohe Temperaturbeständigkeit der Haftklebemassen kann auch an guten Messewerten der Shear Adhesive Failure Temperature (SAFT) aufgezeigt werden. Gleichzeitig soll eine Haftklebemasse entwickelt werden, die eine geringe beziehungsweise steuerbare Abrollkraft aufweist, vorzugsweise sollen die Kohäsionskräfte (KKR) für unterschiedliche Träger steuerbar sein.

Eine weitere Aufgabe bestand darin, dass die Haftklebemassen und Haftmittel auf unterschiedlichen Untergründen gut auffließen wie auf Kabeln als Kabelummantelung, X-PE, ETFE sowie auf Wellrohren (convoluted tubes). Des Weiteren soll eine Klebemasse zur Herstellung der genannten Haftklebemassen entwickelt werden, die insbesondere ein erhöhtes freies Volumen für ein gutes Auffließen aufweisen.

Gelöst werden die Aufgaben durch eine Klebemasse nach Anspruch 1 sowie eine Haftklebemasse nach Anspruch 8, die die Vorteile der Klebemasse kombiniert mit spezifischen Photoinitiatoren. Mit der erfindungsgemäßen Haftklebemasse kann das spezifische Anforderungsprofil bezüglich der viskoelastischen Eigenschaften eingestellt werden. Ferner werden die Aufgaben gelöst durch ein Verfahren zur Herstellung der Haftklebemasse nach Anspruch 12 sowie mit Haftmitteln und Klebebändern nach Anspruch 17 und 21. Bevorzugte Ausführungsformen sind in den Unteransprüchen beschrieben sowie detailliert in der Beschreibung.

Gegenstand der Erfindung sind Haftklebemassen umfassend Klebemassen basierend auf mindestens einem Polymerisationsprodukt von (Meth)Acrylaten, die durch Abmischen mit spezifischen Photoinitiatoren und optionaler UV-Vernetzung die erfindungsgemäßen Haftklebemassen ausbilden können. Als besonders geeignete Klebemassen haben sich Polymerisationsprodukte einer radikalischen Polymerisation in Lösung von Acrylaten erwiesen, insbesondere Polymerisationsprodukte einer Emulsionspolymerisation oder nach einem ähnlichen dem Fachmann bekannten Herstellverfahren, wobei die Molekulargewichte so eingestellt werden, dass Mn > 50.000 g/Mol sowie Mw > 500.000 g/Mol sind.

Die erfindungsgemäßen Klebemassen weisen vorzugsweise eine hohe Polydispersität und intramolekulare Hohlräume auf, das heißt ein hohes freies Volumen im Polymer. Daher ist es bevorzugt, wenn die Klebemasse eine Polydispersität Q des Polymerproduktes Q = Mw/Mn größer gleich 5 aufweist, insbesondere größer gleich 7, besonders bevorzugt größer gleich 8, 10, 12 oder größer gleich 14.

Als geeignete Monomere können alle gängigen Ester von Acrylate und Methacrylate sowie (Meth)acrylsäure verwendet werden. Der statische $T_G$ der Polymerisationsprodukte der Klebemasse sollte vorzugsweise kleiner als 0 °C sein, besonders bevorzugt kleiner gleich -25 °C.

Bei der Polymerisation zur Herstellung der Klebemasse wird zumindest ein Initiator mit hohem Pfropfungsgrad verwendet, wodurch das freie Volumen des Polymers erhöht wird und daraus resultierend das Auffließverhalten. Des Weiteren kann durch diese Maßnahme der Restmonomergehalt gesenkt werden, der vorzugsweise kleiner gleich 1 Gew.-%, besonders bevorzugt kleiner gleich 0,5 Gew.-% ist.

Als besonders geeigneter Photoinitiator in der Haftklebemasse wird ein polyfunktioneller, monomerer oder oligomere Photoinitiator eingesetzt, vorzugsweise ein Norrish Typ I-Initiator, bevorzugt ein alpha-Spalter, umfassend alpha-Hydroxyketone oder deren Derivate, besonders bevorzugt ist ein Oligo [2-hydroxy-2-methyl-1-[4-(1-methylvinyl)phenyl]propanon], oder vorzugsweise Benzophenon-Derivate, insbesondere polymere Benzophenon-Derivate, zum Beispiel Genopol BP-1 der Firma Rahn, oder Thioxanthon-Derivate, insbesondere polymere Thioxanthon-Derivate, zum Beispiel Genopol TX-1 der Firma Rahn.

Zur Herstellung der erfindungsgemäßen Haftklebemassen wird der Photoinitiator in Bezug auf die Gesamtzusammensetzung der Haftklebemasse mit einer Konzentration 0,25 Gew.-% bis 0,75 Gew.-% eingesetzt, bevorzugt sind 0,25 bis 0,5 Gew.-%.

Gegenstand der Erfindung sind Klebemassen umfassend Polymerisationsprodukte von Acrylaten, wobei die Klebemasse schmelzbar ist, wobei die Klebemassen mindestens ein Polymerisationsprodukt umfasst, das aufgebaut ist aus

a) 75 bis 99,9 Gew.-% Ester der (Meth-)acrylsäure der allgemeinen Formel I,

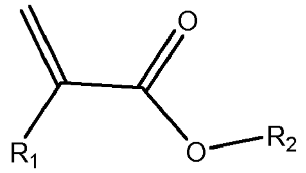

(I)

wobei $R_1$ = H oder $CH_3$ und $R_2$ eine lineare, verzweigte oder cyclische Alkylkette mit 2 bis 20 C-Atomen ist, insbesondere weist die Alkylkette 4 bis 14 C-Atome auf, besonders bevorzugt 4 bis 10 C-Atome, wobei lineare und cyclische Alkyl-Gruppen mit Alkylresten bevorzugt sind,

b) 0,1 bis 25 Gew.-% (Meth-)acrylsäure der Formel II,

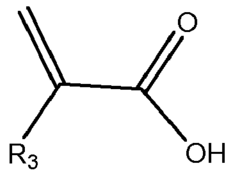

(II)

wobei $R_3$ = H oder $CH_3$ ist, und die Summe aller eingesetzten Komponenten 100 Gew.-% des Polymerisationsproduktes ergibt, wobei das Molekulargewicht des Polymerisationsproduktes Mn größer 50.000 g/Mol und Mw größer 500.000 g/Mol sind.

Gleichfalls Gegenstand der Erfindung sind Klebemassen umfassend mindestens ein Polymerisationsprodukt, das erhältlich ist aus der Umsetzung von (a) und (b) oder das aufgebaut ist aus (a) 75 bis 99,9 Gew.-%, insbesondere zu 80 bis 99,9 Gew.-%, bevorzugt 85 bis 99,9 Gew.-%, vorzugsweise von 90 oder 95 bis 99,9 Gew.-%, aus mindestens einem Ester der (Meth-)acrylsäure der allgemeinen Formel I,

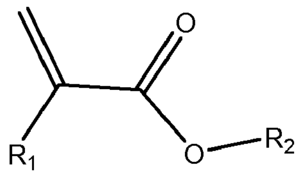

(I)

wobei $R_1$ = H oder $CH_3$ und $R_2$ eine Alkylkette mit 4 bis 20 C-Atomen ist, insbesondere weist die Alkylkette 4 bis 14 C-Atome auf, besonders bevorzugt 4 bis 10 C-Atome ist,

b) 0,1 bis 20 Gew.-%, insbesondere 0,1 bis 15 Gew.-%, bevorzugt 0,1 bis 10 Gew.-%, besonders bevorzugt 0,1 bis 5 Gew.-%, mindestens einer (Meth-)acrylsäure der Formel II wobei $R_3$ = H oder $CH_3$ ist,

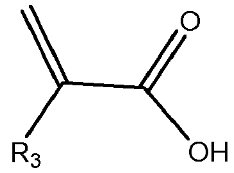

(II)

optional weitere Acrylate und/oder Methacrylate, wie

c) olefinisch ungesättigte Monomere mit funktionellen Gruppen insbesondere der für eine Reaktivität mit Epoxidgruppen nachstehend definierten Art, die nicht bereits ein Monomer der Formel II sind,

d) und/oder olefinisch ungesättigte Monomere, die insbesondere mit der Komponente (a) und/oder (b) copolymerisierbar sind, wobei die Summe aller Komponenten 100 Gew.-% im Polymerisationsprodukt beträgt. In der Klebemasse können zusätzlich zum Polymerisationsprodukt Lösemittel, Lösemittelgemische und/oder Additive sowie Initiatoren oder Katalysatoren für die Polymerisation vorliegen.

Bevorzugte Klebemassen gemäß der Erfindung können mindestens ein folgendes Polymerisationsprodukt umfassen,

(a) 80 bis 99,9 Gew.-% Ester der (Meth-)acrylsäure der allgemeinen Formel I,
(b) 0,1 bis 20 Gew.-% (Meth-)acrylsäure der Formel II,
(c) 0 bis 10 Gew.-% olefinisch ungesättigte Monomere mit funktionellen Gruppen,
(d) 0 bis 10 Gew.-% olefinisch ungesättigte Monomere,

wobei die Summe aller eingesetzten Komponenten 100 Gew.-% des Polymerisationsonsproduktes ergibt. Bevorzugt werden Klebemassen umfassend das Polymerisationsprodukt mit einem Restmonomerengehalt von kleiner gleich 1 Gew.-%, insbesondere kleiner gleich 0,5 Gew.-% in Bezug auf die Gesamtzusammensetzung bereitgestellt.

Die erfindungsgemäße Kombination von Polymerisationsprodukten von Estern der (Meth)acrylsäure, (Meth)acrylsäure sowie optional weiteren Acrylsäurederivaten mit den spezifischen Photoinitiatoren erlaubt die Herstellung von Haftklebemassen mit dem geforderten speziellen viskoelastischen Profil. Dieses viskoelastische Profil ist nicht identisch mit dem Vernetzungsgrad der EP 1 370 590 B. Das erfindungsgemäße viskoelastische Profil, welches für ein Produkt notwendig ist, um die genannten Aufgaben zu lösen, ist durch die tesa TFT-Methode sehr gut mit direktem Bezug auf die Flaggingeigenschaften eines Klebebandes charakterisiert.

Die erfindungsgemäß zu vernetzende Klebemasse und die Haftklebemasse enthält mindestens ein Polyacrylat. Dabei handelt es sich um ein Polymerisat, welches durch radikalische Polymerisation von Acrylmonomeren, worunter auch Methylacrylmonomere verstanden werden, und gegebenenfalls weiteren, copolymerisierbaren Monomeren erhältlich ist.

Bevorzugt handelt es sich um ein mit Epoxidgruppen vernetzbares Polymerisationsprodukt. Entsprechend werden als Monomere oder Comonomere bevorzugt funktionelle, mit Epoxidgruppen vernetzungsfähige Monomere als Komponente (c) eingesetzt. Hier kommen insbesondere Monomere, bevorzugt (Meth)acrylsäureester-Derivate mit zusätzlichen funktionellen Gruppen, vorzugsweise mit Säuregruppen, insbesondere Carbonsäure-, Sulfonsäure- oder Phosphonsäuregruppen und/oder Hydroxygruppen und/oder Säureanhydridgruppen und/oder Epoxidgruppen und/oder Amingruppen zur Anwendung; bevorzugt sind carbonsäuregruppenhaltige Monomere. Es ist insbesondere vorteilhaft, wenn das Polymerisationsprodukt ein Polyacrylat mit einpolymerisierter Acrylsäure und/oder Methacrylsäure ist, die Monomere gemäß b) darstellen.

Weitere Monomere, die als Comonomere für das Polyacrylat verwendet werden können, sind zum Beispiel Acrylsäure- und/oder Methacrylsäureester mit 21 bis zu 30 C-Atomen, Vinylester von bis zu 20 C-Atome enthaltenden Carbonsäuren, Vinylaromaten mit bis zu 20 C-Atomen, ethylenisch ungesättigte Nitrile, Vinylhalogenide, Vinylether von 1 bis 10 C-Atome enthaltenden Alkoholen, aliphatische Kohlenwasserstoffe mit 2 bis 8 C-Atomen und 1 oder 2 Doppelbindungen oder Mischungen dieser Monomeren.

Für das erfindungsgemäße Verfahren wird vorzugsweise ein Polymerisationsprodukt eingesetzt, welches auf die folgende Eduktmischung beruht, enthaltend insbesondere weich machende Monomere, weiterhin Monomere mit funktionellen Gruppen, die in der Lage sind, mit den Epoxygruppen Reaktionen einzugehen, insbesondere Additions- und/oder Substitutionsreaktionen, sowie optional weitere einpolymerisierbare Comonomere, insbesondere hartmachende Monomere. Die Natur des herzustellenden Polyacrylats als Klebemassen (Haftklebemasse; Heißsiegelmasse, viskoelastisches nichtklebriges Material und dergleichen) lässt sich insbesondere über eine Variation der Glasübergangstemperatur des Polymerisationsproduktes durch unterschiedliche Gewichtsanteile der einzelnen Monomere beeinflussen.

Für rein kristalline Systeme gibt es am Schmelzpunkt $T_S$ ein thermisches Gleichgewicht zwischen Kristall und

Flüssigkeit. Amorphe oder teilkristalline Systeme sind hingegen durch die Umwandlung der mehr oder weniger harten amorphen beziehungsweise teilkristallinen Phase in eine weichere (gummiartige bis zähflüssige) Phase gekennzeichnet. Am Glaspunkt kommt es insbesondere bei polymeren Systemen zum "Auftauen" (beziehungsweise "Einfrieren" beim Abkühlen) der Brownschen Molekularbewegung längerer Kettensegmente. Der Übergang vom Schmelzpunkt $T_S$ (auch "Schmelztemperatur"; eigentlich nurfür reinkristalline Systeme definiert; "Polymerkristalle") zum Glasübergangspunkt $T_G$ (auch "Glasübergangstemperatur", "Glastemperatur") kann daher als fließend angesehen werden, je nach dem Anteil der Teilkristallinität der untersuchten Probe.

Im Rahmen dieser Schrift wird im Sinne der vorstehenden Ausführung bei der Angabe des Glaspunktes der Schmelzpunkt mit umfasst, es wird also als Glasübergangspunkt (oder gleichbedeutend auch als Glasübergangstemperatur) auch der Schmelzpunkt für die entsprechenden "schmelzenden" Systeme verstanden. Die Angaben der Glasübergangstemperaturen beziehen sich auf die Bestimmung mittels DSC.

Zur Erzielung von Polymeren, beispielsweise Haftklebemassen oder Heißsiegelmassen, mit gewünschten Glasübergangstemperaturen wird die mengenmäßige Zusammensetzung der Monomermischung vorteilhaft derart gewählt, dass sich nach einer Gleichung (G1) in Analogie zur ***Fox***-Gleichung (vgl. T.G. Fox, Bull. Am. Phys. Soc. 1956, 1, 123) der gewünschte $T_G$-Wert für das Polymer ergibt.

$$\frac{1}{T_G} = \sum_n \frac{w_n}{T_{G,n}} \qquad \text{(G1)}$$

Besonders bevorzugte Photoinitiatoren sind ausgewählt aus a) der $\alpha$-Spalter aus Oligo[2-hydroxy-2-methyl-1-[4-(1-methylvinyl)phenyl]propanon], 2-Hydroxy-1-{4-[4-(2-hydroxy-2-methyl-propionyl)-phenoxy]-phenyl}-2-methyl-propan-1-on, 2,4,6-Trimethylbenzophenon sowie Gemischen umfassend mindestens zwei der vorgenannten $\alpha$-Spalter und b) aus Benzophenonderivaten, oder c) aus Thioxanthon-Derivaten. Ein besonders bevorzugtes Benzophenonderivat ist Genopol BP-1 und ein bevorzugtes Thioxanthonderivat ist Genopol TX-1.

Die Strahlenvernetzung der Haftklebemasse erfolgt besonders bevorzugt mittels UV-Strahlen, wobei eine Strahlenvernetzung mittels anderer Strahlen nicht ausgeschlossen ist. Beispielsweise ist auch eine Elektronenstrahlvernetzung möglich. Eine UV-Bestrahlung erfolgt vorzugsweise im Wellenlängenbereich von 180 bis 400 nm.

Ebenso Gegenstand der Erfindung ist ein Haftmittel erhältlich aus der Haftklebemasse durch Formen der Masse, insbesondere als Haftmittel umfassend mindestens einen Träger wie vorzugsweise ein Klebeband, dessen TFT-Wert (Threshold Flagging Time in [min]) nach einer UV-Vernetzung der Haftklebemasse oder nach einer optionalen Elektronenstrahl-Vernetzung (ESH) vorzugsweise größer gleich 1000 Minuten beträgt, insbesondere größer gleich 1200, bevorzugt größer gleich 1500, besonders bevorzugt größer gleich 2000 Minuten, vorzugsweise größer gleich 2500 Minuten. Besonders bevorzugte Klebebänder weisen TFT-Wert größer gleich ($\geq$) 4000, $\geq$ 4250, $\geq$ 4500 $\geq$ oder 5000 [min] auf. Ein wesentlicher Vorteil der erfindungsgemäß eingesetzten Klebemassen umfassend Photoinitiatoren zeigt sich in dem Prozessfensterfür die UV-Vernetzung, indem sehr gute klebtechnische Eigenschaften mit UV-Dosen von 50 bis 150 $mJ/cm^2$, insbesondere von 60 bis 120 $mJ/cm^2$ sowie um 60, 80 oder 120 $mJ/cm^2$, erhalten werden können.

Aufgrund der UV-Vernetzung der Polymerisationsprodukte in den Haftklebemassen weisen die erfindungsgemäßen Klebemassen sehr gute Shear Adhesion Failure Temperature Werte (SAFT) auf. So können für die erfindungsgemäßen Haftklebemassen SAFT-Werte von größer gleich 120 °C erreicht werden, insbesondere größer gleich 140 °C, bevorzugt größer gleich 160 °C, besonders bevorzugt größer gleich 170 °C und größer gleich 180 °C, in Abhängigkeit von der Konzentration des Photoinitiators und der UV-Dosis in [mJ/min]. Gegenstand der Erfindung sind somit auch Haftklebemassen, insbesondere Haftmittel mit SAFT-Werten größer gleich 140 °C, bevorzugt größer gleich 150 °C.

Die mögliche Elektronenstrahlvernetzung kann mit geeigneten Elektronenstrahldosen von besonders bevorzugt größer gleich 5 kGy bis 10 kGy erfolgen, insbesondere 10 bis 20, 20 bis 30, 30 bis 40, alternativ besonders bevorzugt von 35 bis 45, oder auch größer gleich 40 bis maximal 50 kGy, zweckmäßig bis zu 80 kGy, die ausreichend sind, insbesondere als ESH-Dosis von Masseseite, um in Abhängigkeit vom verwendeten Trägermaterial und der jeweiligen Haftklebemasse TFT-Werte von größer 1500 Minuten zu erzielen, vorzugsweise von größer 2000 Minuten, bevorzugt größer gleich 2100, besonders bevorzugt größer gleich 2200, vorzugsweise TFT-Werte von größer gleich 2500 oder sogar größer gleich 3000 und größer gleich 4000 Minuten zu erzielen.

Erfindungsgemäße Klebebänder zeichnen sich vorteilhaft dadurch aus, dass der TFT-Wert (Threshold Flagging Time) nach der UV-Vernetzung im Vergleich zum TFT-Wert vor der UV-Vernetzung etwa um den Faktor 4 bis größer gleich einem Faktor von 10 größer ist. Vorzugsweise reichen dazu bereits geringe UV-Dosen von kleiner gleich 80 $mJ/cm^2$, insbesondere kleiner gleich 60 $mJ/cm^2$. Bei einer UV-Dosis von 120 $mJ/cm^2$ sind Verbesserungen des TFT-Wertes von einem Faktor größer gleich 80 von beispielsweise einem TFT-Wert von 62 auf 2960 und 5400 möglich, insbesondere, wenn die erfindungsgemäße Haftklebemasse einen eng definierten Gehalt an Photoinitiator von 0,25 Gew.-% bis 0,50 Gew.-% in der Gesamtzusammensetzung aufweist.

Überraschend und für den Fachmann nicht offensichtlich, lassen sich durch Photoinitiatoren (= UV-Vernetzer)

mit mindestens zwei photoaktiven Gruppen pro Molekül Haftklebemassen, insbesondere Haftmittel, mit guten Flagging-Eigenschaften (messbar durch den TFT-Test) erhalten, wenn ein ausgeglichenes Verhältnis zwischen Kohäsion und Adhäsion eingestellt wird. Dies zeigt sich insbesondere an den rheologischen Eigenschaften und zwar dem tan $\delta$ (der Quotient aus G" und G', also dem Verhältnis aus Verlust- und Speichermodul), der bei einer Messfrequenz von 0,1 rad/s (entspricht ungefähr der Zeitskala des Flaggingvorgangs) besonders bevorzugt Werte zwischen $0{,}45 \leq \tan \delta \leq 0{,}50$ einnimmt (siehe Tabelle 6).

Durch die Strahlenvernetzung, insbesondere die UV-Vernetzung, entsteht eine weitmaschige Vernetzung innerhalb der Polymerknäule und führt zu einer Erhöhung des Molekulargewichtes in den Polymerknäulen. Vorteilhafterweise findet nahezu keine Vernetzung zwischen den Polymerknäueln statt, so dass die Masse gut fließfähig bleibt und eine gute Benetzung des Haftgrundes ermöglicht. Belegt werden kann dieses Phänomen mittels rheologischer Untersuchungen (wie DMA, Dynamisch Mechanische Analyse).

Für gute Repulsionseigenschaften der Haftklebemasse ist es von Vorteil, wenn die Haftklebemasse Energie gut dissipieren kann. Dies zeigt sich vorteilhaft in einem günstigen Verlustfaktor tan $\delta$ (Verhältnis zwischen Verlustmodul G" und Speichermodul G'). Dabei beschreibt das Speichermodul G' die elastischen Eigenschaften und das Verlustmodul G" die viskosen Eigenschaften eines viskoelastischen Systems wie hier einer Haftklebemasse, so dass die Viskoelastizität dieses Systems mit einem einzigen Werkstoffkennwert charakterisiert werden kann. Die Werte sind beispielsweise über Dynamisch-Mechanische Analyse (DMA) zugänglich (siehe hinten, Abschnitt "Messmethoden"). Angaben zum Verlustfaktor tan $\delta$ (sowie zum Verlustmodul G" und zum Speichermodul G') beziehen sich auf diese Messung, sofern im Einzelfall nichts anderes angegeben ist.

Sehr vorteilhaft liegt der Verlustfaktor tan $\delta$ bei 0,1 rad/s und 25 °C, Stress 2500 Pa in einem Bereich von 0,45 bis 0,50, bevorzugt im Bereich von 0,46 bis 0,49.

Gleichfalls Gegenstand der Erfindung ist ein Verfahren zur Herstellung der Haftklebemassen sowie Haftklebemassen erhältlich nach diesem Verfahren, indem

(i) eine Klebemasse umfassend ein Polymerisationsprodukt, das insbesondere erhältlich ist aus der Umsetzung der Monomere der Formel I und II sowie optional weiterer Monomere ausgewählt aus c) und d) oder umfassend ein Polymerisationsprodukt, das aufgebaut ist aus

(a) 80 bis 100 Gew.-% Ester der (Meth-)acrylsäure der allgemeinen Formel I,

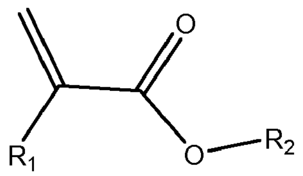

(I)

wobei $R_1$ = H oder $CH_3$ und $R_2$ eine Alkylkette mit 2 bis 20 C-Atomen ist, und
b) 0,1 bis 20 Gew.-% (Meth-)acrylsäure der Formel II,

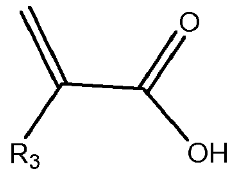

(II)

wobei $R_3$ = H oder $CH_3$ ist, wobei

die Summe aller eingesetzten Komponenten a) und b) im Polymerisationsprodukt 100 Gew.-% ergeben optional umfasst die Klebemasse mindestens ein Lösemittel, Lösemittelgemisch und/oder Additive, wobei das Molekulargewicht des Polymerisationsproduktes Mn größer 50.000 g/Mol ist und Mw größer 500.000 g/Mol ist, mit

(ii) mindestens einem Photoinitiator ausgewählt aus $\alpha$-Spaltern und Benzophenonderivaten gemischt wird, optional vorhandene Lösemittel oder Lösemittelgemische werden vorzugsweise entfernt.

Nach dem Mischen der Komponenten (i) Klebemasse und (ii) Photoinitiator wird in der Klebemasse optional vorhandenes Lösemittel entfernt. In der Klebemasse kann neben dem Polymerisationsprodukt noch Lösemittel, Emulgiermittel oder Dispergiermittel vorhanden sein, das nach dem Zumischen des mindestens einen Photoinitiators entfernt wird.

Das Verfahren zur Herstellung der Haftklebemasse umfasst daher folgende Schritte:

1) Herstellen der Klebemasse in dem die Monomere der Formel I und II und optional die Monomere ausgewählt aus (c) und (d) polymerisiert werden, vorzugsweise erfolgt die Polymerisation radikalisch, bevorzugt erfolgt die Polymerisation in Gegenwart von Lösemittel oder Lösemittelgemischen, besonders bevorzugt in einem Emulsionspolymerisationsverfahren; 2) Erhalten wird die Klebemasse umfassend mindestens ein Polymerisationsprodukt sowie optional Lösemittel oder Lösemittelgemisch, Emulgiermittel und/oder Dispergiermittel; 3) Die so erhaltende Klebemasse wird mit mindestens einem Photoinitiator vermischt und, 4) optional wird ein Lösemittel oder Lösemittelgemisch entfernt, und die Haftklebemasse erhalten.

Die erfindungsgemäß besonders bevorzugt eingesetzten Photoinitiatoren sind vorzugsweise ausgewählt aus Oligo[2-hydroxy-2-methyl-1-[4-(1-methylvinyl)phenyl]-propanon], 2-Hydroxy-1-{4-[4-(2-hydroxy-2-methyl-propionyl)-phenoxy]-phenyl}-2-methyl-propan-1-on, 2,4,6-Trimethylbenzophenon, Derivaten der vorgenannten $\alpha$-Spalter sowie Gemischen umfassend mindestens zwei der vorgenannten $\alpha$-Spalter. Schwefelhaltige Photoinitiatoren, wie 1-[4-(4-Benzoylphenylsulfanyl)-phenyl]-2-methyl-2-(4-methylphenylsulfonyl)-propan-1-on sind nicht geeignet für Herstellung der erfindungsgemäßen Haftklebemassen.

Zur Herstellung der erfindungsgemäßen Haftklebemassen, die insbesondere die besondere viskoelastischen Eigenschaften aufweisen, wird der $\alpha$-Spalter in der Haftklebemasse mit einem Gehalt von etwa 0,25 bis 0,75 Gew.-% in Bezug auf die erhältliche Haftklebemasse, insbesondere in Bezug auf die im wesentlichen lösemittelfreie Haftklebemasse, das heißt im Wesentlichen in Bezug auf das Polymerisationsprodukt eingesetzt.

Besonders vorteilhafte Eigenschaften werden erhalten, wenn der Photoinitiator zu 0,25 bis 0,5 Gew.-%, insbesondere mit einer Schwankungsbreite von +/- 0,05 Gew.-%, besonders bevorzugt mit einer Schwankungsbreite von +/- 0,02 Gew.-% eingesetzt wird.

Entsprechend einer weiteren Ausführungsform ist Gegenstand der Erfindung die Verwendung einer Haftklebemasse zum Herstellen eines Haftmittels, einer Transferklebemasse, eines Transferklebebands, eines beschichteten Trägers, eines Klebebandes, sowie auch ein Haftmittel erhältlich nach dieser Verwendung, indem die schmelzbare Haftklebemasse als Schmelze, insbesondere im Temperaturbereich von 60 bis 200 °C (Hotmelt-Verfahren), mit einem Masseauftrag von 20 bis 250 g/cm$^3$ ausgetragen wird, insbesondere aus einer Düse, und eine Schicht erhalten, optional wird die Schicht auf einen Träger oder einen Transferträger aufgetragen, und die Schicht mit einer energiereichen Strahlung vernetzt, insbesondere mir UV- Strahlung.

Die Dosis der UV-Strahlung weist vorzugsweise eine Strahlungsenergie zwischen 10 bis 150 mJ/cm$^2$ auf. Bevorzugte Schichtdicken der Schicht betragen 2 bis 200 $\mu$m, optional wird die Schicht auf einen Träger oder einen Transferträger aufgetragen.

Der elastische Anteil der Haftklebemasse, insbesondere der vernetzten Haftklebemasse, bevorzugt als Haftmittel, liegt im Bereich von größer gleich 30 %, insbesondere größer gleich 40 % bis 95 %, bevorzugt im Bereich von 40 bis 70 %.

Die erfindungsgemäßen Haftklebemassen, insbesondere die vernetzen Haftklebemassen, bevorzugt die Haftmittel, weisen im Mikroschertest unter Temperaturbelastung bei 40 °C Werte deutlich unter 600 $\mu$m, insbesondere kleiner gleich 500, 400, 300 $\mu$m auf. Insbesondere zeigen die erfindungsgemäßen Haftklebemassen und Haftmittel zugleich gute TFT-Werte von vorzugsweise größer gleich 200 min und/oder zeigen positive Ergebnisseim SAFT-Test oberhalb von 100 °C bis 200 °C.

Als Träger für den Masseauftrag in Form einer Schicht können grundsätzlich alle geeigneten Träger in Betracht kommen, bevorzugt sind Träger oder einen Transferträger, die ausgewählt sind aus Gewebe, Vlies, Folie, Textil und Papier. Als Träger werden auch Deckschichten und Liner erfasst. Besonders bevorzugt sind textile Träger, wie ein flächiger textiler Träger, vorzugsweise ein Gewebe, besonders vorzugsweise ein Polyestergewebe, ein Vlies oder ein Gewirk. Die Flächengewichte der Träger liegen vorzugsweise im Bereich von 30 bis 250 g/m$^2$, vorzugsweise 50 bis 200 g/m$^2$, weiter vorzugsweise 60 bis 150 g/m$^2$.

Die Herstellung von Haftmitteln kann als Direktbeschichtung oder als Transferbeschichtung erfolgen. Die hergestellten Haftmittel können umfassen als Träger (1) Gewebe, (2) Vlies, (3) Folie sowie auch Verbünde aus einer beliebigen Kombination der vorgenannten Träger (1) bis (3), und optional Papier. Ferner können die erfindungsgemäßen Haftmittel beschichtete Träger auch als ausgerüstete Träger bezeichnet aufweisen, diese Ausrüstung kann eine Barriereschicht, eine hydrophobe, oleophobe Beschichtung umfassen sowie eine Kombination der vorgenannten Beschichtungen.

Erfindungsgemäße Haftmittel, insbesondere flächige Haftmittel, weisen vorzugsweise als TFT-Wert (Threshold Flagging Time) in Minuten die folgende TFT-Werte: größer gleich 1000 Minuten auf, besonders vorzugsweise größer gleich 1500 Minuten, besonders bevorzugt größer gleich 2000 Minuten, weiter bevorzugt größer gleich 3000, 3500,

3800, 4000, 4200, 4500 oder größer gleich 4700, 4800, 4900, 5000, 5100, 5200, 5300, 5400. Vorzugsweise können diese hohen TFT-Werte überraschend mit Haftmittel umfassend die strahlenvernetzte Haftklebemasse basierend auf größer gleich 0,25 bis 0,5 Gew.-% mindestens eines Photoinitiators in der Gesamtzusammensetzung erhalten werden.

Die erfindungsgemäßen Haftmittel zeichnen sich vorzugsweise durch besonders gute viskoelastische Eigenschaften aus. So weisen erfindungsgemäße Haftmittel vorzugsweise tan $\delta$ Werte von zwischen $0,45 \leq \tan \delta \leq 0,50$ auf, die tan $\delta$ Werte entsprechen dem Quotient aus G" und G', der dem Verhältnis aus Verlust- und Speichermodul entspricht, gemessen bei einer Messfrequenz von 0,1 rad/s.

Gleichfalls ist es bevorzugt, wenn die erfindungsgemäßen Haftmittel eine Scherstandzeit (SSZ) von größer gleich 100 Minuten aufweisen, insbesondere größer gleich 110, bevorzugt größer gleich 120, 130, 140, 150, 160 oder 170. Diese Scherstandzeiten werden vorzugsweise entsprechend der Methode SSZ gemessen. Gemessen wird die Scherstandzeit an einem 13 mm breiten und mindestens 20 mm (beispielsweise 30 mm) langen Streifen des Haftmittels mit Träger, insbesondere einem Klebeband, auf einer glatten Stahloberfläche mit einer Verklebungsfläche von 20 mm x 13 mm (Länge x Breite), wobei das Haftmittel die Prüfplatte am Rand überragt, und nach viermaligem Anpressen des Haftmittels mit einem Anpressdruck entsprechend einem Gewicht von 2 kg auf den Stahlträger, wobei die Probe gebildet wird, wobei die Messung erfolgt indem a) die Probe senkrecht aufgehängt wird, so dass das überstehende Ende des Klebebandes nach unten zeigt, b) bei Raumtemperatur ein Gewicht von 1 kg an dem überstehenden Ende des Haftmittels befestigt wird, und die Messung bei einem Normalklima (23 °C, 55 % Luftfeuchtigkeit) und optional bei 70 °C erfolgt, c) die Scherstandzeit in Minuten wird als Zeit bis zum vollständigen Ablösen des Klebebandes vom Untergrund gemessen.

Besonders bevorzugte Haftmittel nach der Erfindung weisen Scherstandzeiten größer gleich 100 und zugleich TFT-Werte von größer gleich 2000, insbesondere größer gleich 2500 auf.

Entsprechend einer Ausführungsform der Erfindung werden bereitgestellt flächige Haftmittel ausgewählt ist aus einem Etikett, Stanzling, Klebeband, Kabelwickelband oder einer Schutzfolie oder einer flächigen Transferklebemasse oder einem Transferklebeband.

Ebenfalls beansprucht werden flächige Haftmittel, insbesondere Klebebänder, zum Ummanteln von langgestrecktem Gut, wie insbesondere Kabelsätzen, und die Verwendung zur Ummantelung, wie Kabelwickelbänder, insbesondere zum Umwickeln von Kabeln, umfassend einen Träger, vorzugsweise einen textilen Träger.

Bevorzugt wird ein Polymerisationsprodukt eingesetzt, das auf die folgende Monomerzusammensetzung zurückgeführt werden kann:

> Monomere zur Herstellung der Polymerisationsprodukte: Die Monomere der Komponente (a) Ester der Acrylsäure der Formel I sind insbesondere weichmachende und/oder unpolare Monomere. Vorzugsweise werden für die Monomere (a) Acrylmonomere eingesetzt, die Acryl- und Methacrylsäureester mit Alkylgruppen, bestehend aus 2 bis 20 C-Atomen, bevorzugt 2 bis 9 C-Atomen, umfassen. Beispiele für derartige Monomere sind n-Butylacrylat, n-Butylmethacrylat, n-Pentylacrylat, n-Pentylmethacrylat, n-Amylacrylat, n-Hexylacrylat, Hexylmethacrylat, n-Heptylacrylat, n-Octylacrylat, n-Octylmethacrylat, n-Nonylacrylat, Isobutylacrylat, Isooctylacrylat, Isooctylmethacrylat, und deren verzweigten Isomere, wie sec-Butylacrylat, *tert*-Butylacrylat, besonders bevorzugt sind n-Butylacrylat, n-Butylmethacrylat, 2-Ethylhexylacrylat, 2-Ethylhexylmethacrylat.

Die Monomere der Komponente (b) sind insbesondere Acrylsäure und Methacrylsäure.

Die Monomere der Komponente (c) sind insbesondere olefinische ungesättigte Monomere mit funktionellen Gruppen, insbesondere mit funktionellen Gruppen, die eine Reaktion mit den Epoxidgruppen eingehen können. Bevorzugte Monomere sind funktionalisierte (Meth)acrylate, insbesondere mit mindestens einer weiteren funktionellen Gruppe ausgewählt aus Hydroxy-, Carbonsäure, Anhydrid-, Amid-, Urethan-, Sulfonsäure- und Phosphorsäure-Gruppen.

Bevorzugt werden für die Komponente (c) Monomere mit solchen funktionellen Gruppen eingesetzt, die aus der folgenden Aufzählung ausgewählt sind: Hydroxy-, Carboxy-, Sulfonsäure-, oder Phosphonsäuregruppen, Säureanhydride, Epoxide, Amine. Besonders bevorzugte Beispiele für Monomere der Komponente (c) sind Itaconsäure, Maleinsäure, Fumarsäure, Crotonsäure, Aconitsäure, Dimethylacrylsäure, β-Acryloyloxypropionsäure, Trichloracrylsäure, Vinylessigsäure, Vinylphosphonsäure, Maleinsäureanhydrid, Hydroxyethylacrylat, Hydroxypropylacrylat, Hydroxyethylmethacrylat, Hydroxypropylmethacrylat, 6-Hydroxyhexylmethacrylat, Allylalkohol, Glycidylacrylat, Glycidylmethacrylat.

Prinzipiell können im Sinne der Komponente (c) alle vinylisch-funktionalisierten Verbindungen eingesetzt werden, die mit der Komponente (a) und/oder der Komponente (b) copolymerisierbar sind, und können auch zur Einstellung der Eigenschaften der resultierenden Haftklebemasse dienen.

Beispielhaft genannte Monomere für die Komponente (d) sind:

> Alkylester der Acrylsäure mit 1 bis 3 C-Atomen und/oder 21, 22, 23, 24 bis 30 C-Atomen in der Ester-Gruppe sowie Aryl-Ester, sowie weitere Ester, die von den (a) Estern der (Meth-)acrylsäure der allgemeinen Formel I verschieden sind, als olefinisch ungesättigte Monomere gelten auch Ester der Acrylsäure mit Ether-Gruppen, insbesondere Methylacrylat, Ethylacrylat, Propylacrylat, Methylmethacrylat, Ethylmethacrylat, Benzylacrylat, Benzylmethacrylat,

Phenylacrylat, Phenylmethacrylat, Isobornylacrylat, Isobornylmethacrylat, *tert*-Butylphenylacrylat, *tert*-Butylaphenylmethacrylat, Dodecylmethacrylat, Isodecylacrylat, Laurylacrylat, n-Undecylacrylat, Stearylacrylat, Tridecylacrylat, Behenylacrylat, Cyclohexylmethacrylat, Cyclopentylmethacrylat, Phenoxyethylacrlylat, Phenoxyethylmethacrylat, 2-Butoxyethylmethacrylat, 2-Butoxyethylacrylat, 3,3,5-Trimethylcyclohexylacrylat, 3,5-Dimethyladamantylacrylat, 4-Cumylphenylmethacrylat, Cyanoethylacrylat, Cyanoethylmethacrylat, 4-Biphenylacrylat, 4-Biphenylmethacrylat, 2-Naphthylacrylat, 2-Naphthylmethacrylat, Tetrahydrofufurylacrylat, Diethylaminoethylacrylat, Diethylaminoethylmethacrylat, Dimethylaminoethyl-acrylat, Dimethylaminoethylmethacrylat, 2-Butoxyethylacrylat, 2-Butoxyethylmethacrylat, 3-Methoxyacrylsäuremethylester, 3-Methoxybutylacrylat, 2-Phenoxyethylmethacrylat, Butyldiglykolmethacrylat, Ethylenglycolacrylat, Ethylenglycolmonomethylacrylat, Methoxy Polyethylenglykolmethacrylat 350, Methoxy Polyethylenglykolmethacrylat 500, Propylenglycolmonomethacrylat, Butoxydiethylenglykolmethacrylat, Ethoxytriethylenglykolmethacrylat, Octafluoropentylacrylat, Octafluoropentylmethacrylat, 2,2,2-Trifluoroethylmethacrylat, 1,1,1,3,3,3-Hexafluoroisopropylacrylat, 1,1,1,3,3,3-Hexafluoroisopropylmethacrylat, 2,2,3,3,3-Pentafluoropropylmethacrylat, 2,2,3,4,4,4-Hexafluorobutylmethacrylat, 2,2,3,3,4,4,4-Heptafluorobutylacrylat, 2,2,3,3,4,4,4-Heptafluorobutylmethacrylat, 2,2,3,3,4,4,5,5,6,6,7,7,8,8,8-Pentadecafluorooctylmethacrylat, Dimethylaminopropylacrylamid, Dimethylaminopropylmethacrylamid, *N*-(1-Methylundecyl)-acrylamid, *N*-(n-Butoxymethyl)acrylamid, *N*-(Butoxymethyl)methacrylamid, *N*-(Ethoxymethyl)acrylamid, *N*-(n-Octadecyl)acrylamid, weiterhin *N*,*N*-Dialkyl-substituierte Amide, wie beispielsweise *N*,*N*-Dimethylacrylamid, *N*,*N*-Dimethylmethacrylamid, *N*-Benzylacrylamide, *N*-Isopropylacrylamid, *N*-*tert*-Butylacrylamid, *N*-*tert*-Octylacrylamid, *N*-Methylolacrylamid, *N*-Methylolmethacrylamid, Acrylnitril, Methacrylnitril, Vinylether, wie Vinylmethylether, Ethylvinylether, Vinylisobutylether, Vinylester, wie Vinylacetat, Vinylchlorid, Vinylhalogenide, Vinylidenchlorid, Vinylidenhalogenide, Vinylpyridin, 4-Vinylpyridin, *N*-Vinylphthalimid, *N*-Vinyllactam, *N*-Vinylpyrrolidon, Styrol, $\alpha$- und p-Methylstyrol, $\alpha$-Butylstyrol, 4-n-Butylstyrol, 4-n-Decylstyrol, 3,4-Dimethoxystyrol. Makromonomere wie 2-Polystyrolethylmethacrylat (Molekulargewicht Mw von 4000 bis 13000 g/mol), Poly(methylmethacrylat)ethylmethacrylat (Mw von 2000 bis 8000 g/mol).

Monomere der Komponente (d) können vorteilhaft auch derart gewählt werden, dass sie funktionelle Gruppen enthalten, die eine nachfolgende strahlenchemische Vernetzung (beispielsweise durch Elektronenstrahlen, UV) unterstützen. Geeignete copolymerisierbare Photoinitiatoren sind zum Beispiel Benzoinacrylat und acrylatfunktionalisierte Benzophenonderivate. Monomere, die eine Vernetzung durch Elektronenbestrahlung unterstützen sind, zum Beispiel Tetrahydrofufurylacrylat, *N*-*tert*-Butylacrylamid, Allylacrylat wobei diese Aufzählung nicht abschließend ist.

Die Herstellung der Polyacrylate kann nach den dem Fachmann geläufigen Verfahren geschehen, insbesondere vorteilhaft durch konventionelle radikalische Polymerisationen oder kontrollierte radikalische Polymerisationen. Die Polyacrylate können durch Copolymerisation der monomeren Komponenten unter Verwendung der üblichen Polymerisationsinitiatoren sowie gegebenenfalls von Reglern hergestellt werden, wobei bei den üblichen Temperaturen in Substanz, in Emulsion, zum Beispiel in Wasser oder flüssigen Kohlenwasserstoffen, oder in Lösung polymerisiert wird.

Vorzugsweise werden die Polyacrylate durch Polymerisation der Monomere in Lösungsmitteln, insbesondere in Lösungsmitteln eines Siedebereichs von 50 bis 150 °C, vorzugsweise von 60 bis 120 °C unter Verwendung der üblichen Mengen an Polymerisationsinitiatoren, die im allgemeinen bei 0,01 bis 5, insbesondere bei 0,1 bis 2 Gew.-% (bezogen auf das Gesamtgewicht der Monomeren) liegen, hergestellt.

Prinzipiell eignen sich alle für Acrylate dem Fachmann geläufigen, üblichen Initiatoren. Beispiele für Radikalquellen sind Peroxide, Hydroperoxide und Azoverbindungen, zum Beispiel Dibenzoylperoxid, Cumolhydroperoxid, Cyclohexanonperoxid, Di-*tert*-butylperoxid, Cyclohexylsulfonylacetylperoxid, Diisopropylpercarbonat, *tert*-Butylperoktoat, Benzpinacol. In einer sehr bevorzugten Vorgehensweise wird als radikalischer Initiator 2,2'-Azobis(2-methylbutyronitril) (Vazo® 67™ der Firma DuPont) oder 2,2'-Azobis(2-methylpropionitril) (2,2'-Azobisisobutyronitril; AIBN; Vazo® 64™ der Firma DuPont) verwendet.

Als Lösungsmittel kommen Alkohole, wie Methanol, Ethanol, n-und iso-Propanol, n-und iso-Butanol, vorzugsweise Isopropanol und/oder Isobutanol; sowie Kohlenwasserstoffe wie Toluol und insbesondere Benzine eines Siedebereichs von 60 bis 120 °C in Frage. Insbesondere können Ketone, wie vorzugsweise Aceton, Methylethylketon, Methylisobutylketon und Ester, wie Essigsäureethylester sowie Gemische von Lösungsmitteln der genannten Art eingesetzt werden, wobei Gemische, die Isopropanol, insbesondere in Mengen von 2 bis 15 Gew.-%, bevorzugt 3 bis 10 Gew.-%, bezogen auf das eingesetzte Lösungsmittelgemisch, enthalten, vorgezogen werden.

Das Zahlenmittel der Molmasse Mn der Polymerisationsprodukte der Acrylate liegt vorzugsweise bei größer gleich 50.000 g/Mol, bevorzugt bei vorstehend genannten Werten. Das gewichtsmittleren Molekulargewichte Mw der Polyacrylate liegt bevorzugt in einem Bereich von 500.000 bis 2.000.000 g/mol; sehr bevorzugt in einem Bereich von 500.000 bis 1.500.000 g/mol, besonders bevorzugt in einem Bereich von 1.000.000 bis 1.500.000 g/mol, alternativ von 500.000 bis 1.000.000 g/mol [die Angaben des mittleren Molekulargewichtes Mw und der Polydisperistät (PD) dargestellt als Q in dieser Schrift beziehen sich auf die Bestimmung per Gelpermeationschromatographie (siehe Messmethode A2; experimenteller Teil)]. Dazu kann es vorteilhaft sein, die Polymerisation in Gegenwart geeigneter Polymerisationsregler wie Thiolen, Halogenverbindungen und/oder Alkoholen durchzuführen, um das gewünschte mittlere Molekulargewicht

einzustellen.

Das Polyacrylat hat vorzugsweise einen K-Wert von 30 bis 90, besonders bevorzugt von 40 bis 70, gemessen in Toluol (1 %ige Lösung, 21 °C). Der K-Wert nach Fikentscher ist ein Maß für das Molekulargewicht und die Viskosität des Polymerisats.

Es kann den durch das erfindungsgemäße Verfahren erhältlichen Polyacrylaten vor der thermischen Vernetzung zumindest ein klebrigmachendes Harz beigemischt werden. Als zuzusetzende klebrigmachende Harze sind die vorbekannten und in der Literatur beschriebenen Klebharze einsetzbar. Insbesondere sei verwiesen auf alle aliphatischen, aromatischen, alkylaromatischen Kohlenwasserstoffharze, Kohlenwasserstoffharze auf Basis reiner Monomere, hydrierte Kohlenwasserstoffharze, funktionelle Kohlenwasserstoffharze sowie Naturharze. Bevorzugt lassen sich Pinen-, Inden- und Kolophoniumharze einsetzen, deren disproportionierte, hydrierte, polymerisierte, veresterte Derivate und Salze, Terpenharze und Terpenphenolharze sowie $C_5$-, $C_9$- und andere Kohlenwasserstoffharze. Auch Kombinationen dieser und weiterer Harze können vorteilhaft eingesetzt werden, um die Eigenschaften der resultierenden Klebmasse wunschgemäß einzustellen. Besonders bevorzugt lassen sich alle mit dem entsprechenden Polyacrylat kompatiblen (löslichen) Harze einsetzen. In einer besonders bevorzugten Vorgehensweise werden Terpenphenolharze und/oder Kolophoniumester hinzugesetzt.

Optional können auch pulver- und granulatförmige Füllstoffe, Farbstoffe und Pigmente, besonders auch abrasive und verstärkende wie zum Beispiel Kreiden ($CaCO_3$), Titandioxide, Zinkoxide und Ruße auch zu hohen Anteilen, das heißt von 1 bis 50 Gew.-%, bezogen auf die Gesamtrezeptur, hervorragend in die Polyacrylatschmelze dosiert, homogen eingearbeitet und am 2-Walzenauftragswerk beschichtet werden. Hier versagen oftmals die konventionellen Verfahren aufgrund der dann sehr hohen Viskosität des Gesamtcompounds.

Sehr bevorzugt können verschiedene Kreideformen als Füllstoff eingesetzt werden, wobei besonders bevorzugt Mikrosöhl-Kreide eingesetzt wird. Bei bevorzugten Anteilen bis zu 30 Gew.-% verändern sich die klebtechnischen Eigenschaften (Scherfestigkeit bei RT, Sofortklebkraft auf Stahl und PE) durch den Füllstoffzusatz praktisch nicht.

Weiterhin können schwerentflammbare Füllstoffe wie beispielsweise Ammoniumpolyphosphat, weiterhin elektrisch leitfähige Füllstoffe (wie beispielsweise Leitruß, Kohlenstofffasern und/oder silberbeschichtete Kugeln), weiterhin thermisch leitfähige Materialien (wie beispielsweise Bornitrid, Aluminiumoxid, Siliciumcarbid), weiterhin ferromagnetische Additive (wie beispielsweise Eisen-(III)-oxide), weiterhin Additive zur Volumenerhöhung, insbesondere zur Herstellung geschäumter Schichten beziehungsweise syntaktischer Schäume, (wie beispielsweise Blähmittel, Glasvollkugeln, Glashohlkugeln, carbonisierte Mikrokugeln, phenolische Mikrohohlkugeln Mikrokugeln aus anderen Materialien, expandierbare Microballons (Expander® der Firma AkzoNobel), Kieselsäure, Silicate, organisch nachwachsende Rohstoffe, beispielsweise Holzmehl, organische und/oder anorganische Nanopartikel, Fasern), weiterhin Alterungsschutzmittel, Lichtschutzmittel, Ozonschutzmittel, Compoundierungsmittel und/oder Blähmittel vor oder nach der Aufkonzentration des Polyacrylats zugegeben oder eincompoundiert werden. Als Alterungsschutzmittel können bevorzugt sowohl primäre, zum Beispiel 4-Methoxyphenol oder Irganox® 1076, als auch sekundäre Alterungsschutzmittel, zum Beispiel Irgafos® TNPP oder Irgafos® 168 der Firma BASF, auch in Kombination miteinander eingesetzt werden. Hier soll nur an dieser Stelle auf weitere entsprechenden Irganox® Typen der Firma BASF beziehungsweise Hostanox® der Firma Clariant verwiesen werden. Als weitere hervorragende Mittel gegen Alterung können Phenothiazin (C-Radikalfänger) sowie Hydrochinonmonomethylether in Gegenwart von Sauerstoff sowie Sauerstoff selbst eingesetzt werden.

Optional können die üblichen Weichmacher (Plastifizierungsmittel), insbesondere in Konzentrationen von bis zu 5 Gew.-%, zugesetzt werden. Als Weichmacher können beispielsweise niedermolekulare Polyacrylate, Phthalate, wasserlösliche Weichmacher, Weichharze, Phosphate, Polyphosphate, Adipate und/oder Citrate zudosiert werden.

Weiterhin optional kann das thermisch vernetzbare Acrylathotmelt auch mit anderen Polymeren geblendet beziehungsweise abgemischt werden. Hierzu eignen sich Polymere auf Basis von Naturkautschuk, Synthesekautschuk, Styrolblockcopolymeren, EVA, Siliconkautschuk, Acrylkautschuk, Polyvinylether. Hierbei erweist sich als zweckmäßig, diese Polymere in granulierter oder andersartig zerkleinerter Form dem Acrylathotmelt vor Zugabe des thermischen Vernetzers zuzusetzen. Die Herstellung der Polymerblends erfolgt in einem Extruder, bevorzugt in einem Mehrwellenextruder oder in einem Planetwalzenmischer. Zur Stabilisierung der thermisch vernetzten Acrylathotmelts, insbesondere auch von Polymerblends aus thermisch vernetzten Acrylathotmelts und anderen Polymeren, kann es sinnvoll sein, das ausgeformte Material mit Elektronenbestrahlung geringer Dosen zu bestrahlen. Optional können zu diesem Zweck dem Polycrylat Vernetzungspromotoren wie di-, tri-, oder multifunktionelles Acrylat, Polyester und/oder Urethanacrylat zugesetzt werden.

Als Photoinitiatoren können generell bevorzugt solche eingesetzt werden, die die entweder homolytisch in zwei Radikalfragmente zerfallen ($\alpha$-Spalter wie zum Beispiel Benzoinderivate) oder durch Anregung in den Triplettzustand Diradikale bilden (zum Beispiel Benzophenonderivate), die durch Wasserstoffabstraktion im Polymer reaktive Radikale erzeugen, z.B.:

$\alpha$-Hydroxyketone, Benzophenonderivaten, Phenylglyoxylate, Benzildimethylketalen; wie 1-Hydroxy-cyclohexylphenyl-keton, Gemisch von Benzophenon/1-Hydroxy-cyclohexylphenyl-keton, 2-Hydroxy-2-methyl-1-phenyl-1-propanon; 2-Hydroxy-1-[4-(2-hydroxyethoxy) phenyl]-2-methyl-1-propanon, Methylbenzoylformat, oxy-phenyl-acetic acid 2-[2 oxo-2phenyl-acetoxy-ethoxy]-ethylester und oxy-phenyl-acetic 2-[2-hydroxyethoxy]-ethylester, Alpha, alpha-dimethoxy-alpha-phenylacetophenon, 2-Benzyl-2-(dimethylamino)-1-[4- (4-morpholinyl)phenyl]-1-butanon, 2-Methyl-1-[4-(methylthio)phenyl]-2-(4-morpholinyl)-1-propanon, Diphenyl (2,4,6-trimethylbenzoyl)-phosphinoxid.

Noch bevorzugter sind Photoinitiatoren mit mindestens zwei der photoaktiven Gruppen pro Molekül, wobei es sich dabei um zwei gleichartige oder auch zwei unterschiedliche photoreaktive Gruppen handeln kann.

Bevorzugte Beispiele sind: Esacure KIP 150, Esacure 1001 M sowie auch Mischungen der oben genannten Systeme mit monofunktionellen Photoinitiatoren.

Im Folgenden soll das Klebeband anhand mehrerer Figuren näher erläutert werden, ohne damit eine wie auch immer geartete Einschränkung hervorrufen zu wollen.

Es zeigen

Figur 1 das Klebeband im seitlichen Schnitt,

Figur 2 einen Ausschnitt eines Kabelbaums, der sich aus einer Bündelung von einzelnen Kabeln zusammensetzt und der mit dem erfindungsgemäßen Klebeband ummantelt ist, und

Figur 3 eine vorteilhafte Anwendung des Klebebands.

In der Figur 1 ist im Schnitt in Querrichtung (Querschnitt) das Klebeband gezeigt, das aus einem Gewebeträger 1 besteht, auf den einseitig eine Schicht einer selbstklebenden Beschichtung 2 aufgebracht ist.

In der Figur 2 ist ein Ausschnitt eines Kabelbaums gezeigt, der sich aus einer Bündelung von einzelnen Kabeln 7 zusammensetzt und der mit dem erfindungsgemäßen Klebeband 11 ummantelt ist. Das Klebeband wird in einer schraubenlinienförmigen Bewegung um den Kabelbaum geführt.

Der gezeigte Ausschnitt des Kabelbaums zeigt zwei Wicklungen I und II des Klebebands. Nach links hin würden sich weitere Wicklungen erstrecken, diese sind hier nicht dargestellt.

In einer weiteren Ausführungsform für eine Ummantelung werden zwei mit einer Klebemasse ausgerüstete erfindungsgemäße Bänder 60, 70 mit ihren Klebemassen versetzt (bevorzugt um jeweils 50 %) aufeinander laminiert, so dass sich ein Produkt ergibt, wie es in Figur 3 dargestellt ist.

**Experimenteller Teil**

Die folgenden beispielhaften Experimente sollen die Erfindung näher erläutern, ohne dass durch die Wahl der angegebenen Beispiele die Erfindung unnötig eingeschränkt werden soll.

<u>Messmethoden (allgemein):</u>

<u>Statische Glasübergangstemperatur Tg</u>: Die Bestimmung der statischen Glasübergangstemperatur erfolgt über Dynamische Differenzkalorimetrie nach DIN 53765. Die Angaben zur Glasübergangstemperatur Tg beziehen sich auf den Glasumwandlungstemperatur-Wert Tg nach DIN 53765:1994-03, sofern im Einzelfall nichts anderes angegeben ist.

Dynamisch mechanische Analyse (DMA) zur Bestimmung von Verlustfaktor tan $\delta$ Verfahrensführung: Verlustfaktor-Werte (sowie Verlustmodul-Werte, Speichermodul-Werte) werden mittels Frequenzsweep ermittelt. Alle Angaben im Rahmen dieser Schrift beziehen sich auf die Ergebnisse dieser Messungen, sofern im Einzelnen nichts anderes angegeben ist. Bei der DMA wird davon Gebrauch gemacht, dass die Eigenschaften von viskoelastischen Materialien sich bei einer sinusförmigen mechanischen Beanspruchung von der Frequenz der Beanspruchung (also der Zeit) als auch von der Temperatur abhängen.

DMA-Verfahrensführung: Messgerät: Rheometric Scientific RDA III; Messkopf: federgelagert mit Normalkraft; Temperierung: Heizkammer; Messgeometrie: parallele-Platten-Anordnung, Probendicke 1 ($\pm$ 0,1) mm; Probendurchmesser 25 mm (zur Herstellung einer 1 mm dicken Probe wurden 5 Schichten (jeweils 200 $\mu$m) des zu untersuchenden Klebebandes aufeinanderlaminiert; da der PET-Träger zu den rheologischen Eigenschaften nicht maßgeblich beiträgt, kann seine Anwesenheit vernachlässigt werden).

Bei der DMA wird davon Gebrauch gemacht, dass die Eigenschaften von viskoelastischen Materialien sich bei einer sinusförmigen mechanischen Beanspruchung von der Frequenz der Beanspruchung (also der Zeit) als auch von der Temperatur abhängen. Bei dem TTS-Verfahren werden in regelmäßigen Temperaturabständen durchgeführte Frequenzmessungen zu einem Frequenzsweep verrechnet; dadurch kann der durch die Messungen zugängliche Bereich um mehrere Dekaden nach unten und nach oben erweitert werden.

Alle DMA-Verfahrensführungen: Messgerät: Rheometric Scientific RDA III; Messkopf: federgelagert mit Normalkraft; Temperierung: Heizkammer; Messgeometrie: parallele-Platten-Anordnung, Probendicke 1 (± 0,1) mm; Probendurchmesser 25 mm (zur Herstellung einer 1 mm dicken Probe wurden 5 Schichten (jeweils 200 μm) des zu untersuchenden Klebebandes aufeinanderlaminiert; da der PET-Träger zu den rheologischen Eigenschaften nicht maßgeblich beiträgt, kann seine Anwesenheit vernachlässigt werden).

Methode tanδ (0,1 rad/s), 25 °C mittels DMA

SAFT - Shear Adhesive Failure Temperature: Dieser Test dient der Schnellprüfung der Scherfestigkeit von Klebebändern unter Temperaturbelastung. Dafür wird das zu untersuchende Klebeband auf eine temperierbare Stahlplatte geklebt, mit einem Gewicht (50 g) belastet und die Scherstrecke aufgezeichnet.

*Messprobenpräparation:* Das zu untersuchende Klebeband wird auf eine 50 μm dicke Aluminiumfolie geklebt. Das so präparierte Klebeband wird auf eine Größe von 10 mm x 50 mm geschnitten. Die zugeschnittene Klebebandprobe wird auf eine polierte, mit Aceton gereinigte Stahl-Prüfplatte (Werkstoff 1.4301, DIN EN 10088-2, Oberfläche 2R, Oberflächen-Rauigkeit Ra = 30 bis 60 nm, Abmessungen 50 mm x 13 mm x 1,5 mm) derart verklebt, dass die Verklebungsfläche der Probe Höhe x Breite = 13 mm x 10 mm beträgt und die Stahl-Prüfplatte am oberen Rand um 2 mm überragt. Anschließend mit einer 2 kg-Stahlrolle und einer Geschwindigkeit von 10 m/min zur Fixierung sechsmal überrollt. Die Probe wird oben bündig mit einem stabilen Klebestreifen verstärkt, der als Auflage für den Wegmessfühler dient. Dann wird die Probe mittels der Stahlplatte derart aufgehängt, dass das länger überstehende Ende des Klebebandes senkrecht nach unten zeigt.

*Messung:*

Die zu messende Probe wird am unteren Ende mit einem Gewicht von 50 g belastet. Die Stahl-Prüfplatte mit der verklebten Probe wird beginnend bei 25 °C mit einer Rate von 9 °C pro Minute auf die Endtemperatur von 200 °C aufgeheizt. Beobachtet wird der Rutschweg der Probe mittels Wegmessfühler in Abhängigkeit von Temperatur und Zeit. Der maximale Rutschweg ist auf 1000 μm (1 mm) festgelegt, bei überschreiten wird der Test abgebrochen. Prüfklima: Raumtemperatur 23 ± 3 °C, relative Luftfeuchtigkeit 50 ± 5 %. Der Text gilt als bestanden (die Probe als hinreichend temperaturbeständig), wenn die Rutschstrecke bei 200 °C den Wert von 1000 μm nicht überschritten hat. Bei Nichtbestehen des Tests wird die Temperatur bei Erreichen des maximalen Rutschweges (1000 μm) angegeben (in °C).

TFT-Methode (Messmethode H4)

**Beurteilungskriterien:** Die Kriterien für ein anwendungsgerechtes Klebeband für die Umwicklung von Kabeln ist vorliegend die Klebkraft auf Stahl, die Klebkraft auf der Rückseite in Kombination mit der Abrollkraft bei 30 m/min. Abrollkraft von Rollen nach Lagerung bei Raumtemperatur, circa 23 °C über 4 Wochen und 50 % Luftfeuchtigkeit. Durchführung der Tests: Die Messungen werden - soweit nicht ausdrücklich anders erwähnt - bei einem Prüfklima von 23 ± 1 °C und 50 ± 5 % rel. Luftfeuchte durchgeführt.

Messung der Abflaggresistenz nach LV312 beziehungsweise TFT-Methode (Threshold Flagging Time): Zur Ermittlung des Flaggingverhaltens nach der TFT-Methode kommt ein Test zum Einsatz, bei dem durch die Applikation der flach präparierten Prüflinge auf einem 1½"-Kern eine zusätzliche Biegespannung erzeugt wird. Die Kombination aus Zugbelastung durch ein Prüfgewicht und Biegespannung bewirkt ein flagging-ähnliches Ablösen des Klebebandes vom verklebten oberen Ende her und ein letztendliches Versagen durch Abfallen der Prüflinge (siehe Figur 4, in der auch der schematische Aufbau gezeigt ist). Die Zeit in Minuten bis zum Abfallen ist das Ergebnis. Die ausschlaggebenden Parameter für die Haltezeit der Prüflinge sind Gewicht und Temperatur, wobei das Gewicht so zu wählen ist, dass sich Werte von mindestens 100 min ergeben.

Der zylindrisch geformte Prüfdorn ist 1 ½"-Pappkern mit 42 ± 2 mm Außendurchmesser, versehen mit einer Markierungslinie 5 mm neben der Scheitellinie. Der Haftgrund ist die eigene Rückseite des Klebebands. Der Handroller hat ein Gewicht von 2 kg. Das Prüfgewicht beträgt 1 kg. Das Prüfklima ist 23 ± 1 °C bei 50 ± 5 % rel. Feuchte beziehungsweise 40 °C im Wärmeschrank.

Die Prüfung erfolgt an Streifen von 19 mm breiten Klebebändern. Ein Streifen von 400 mm Länge wird auf Trennpapier geklebt und zu drei Streifen von je 100 mm Länge zugeschnitten. Dabei ist eine frische Cutterklinge zu verwenden. Die Rückseite darf nicht berührt werden. Unter eines der Enden eines jeden Streifens wird ein Pappkärtchen geklebt und der Verbund gelocht (siehe Figur 5). Die Prüfstreifen werden nun einzeln mittig auf Streifen des breiteren Haftgrunds (Klebeband in 1 ½-facher Breite des zu prüfenden Klebebands) verklebt, so dass das Pappkärtchen noch knapp (2 bis 3 mm) am Ende überlappt (siehe Figur 6). Die Prüflinge werden mit dem 2 kg-Handroller in 3 Zyklen mit einer Geschwindigkeit von 10 m/min überrollt. Die fertigen Prüfmuster, also die Prüfstreifen samt Haftgrund, werden nun so auf den Pappkern geklebt, dass das obere Ende des Prüflings den Scheitelpunkt um 5 mm überlappt (siehe Figur 7). Dabei darf nur der Haftgrund und nicht der Prüfling angedrückt werden. Die fertig präparierten Prüflinge werden für 20 ± 4 Stunden ohne Gewichtsbelastung in einem Klimaraum bei 40 °C belassen.

Danach werden Gewichte mit einer Masse von einem Kilogramm angehängt und die Messuhren gestartet. Die

Messung endet nach Versagen aller drei Prüflinge eines Musters. Der Median der drei Einzelmessungen wird in Minuten angegeben. Die Haltezeit wird in Minuten angegeben. Dabei gilt ein TFT-Wert von > 1000 Minuten, vorzugsweise größer 1200 Minuten, besonders bevorzugt größer 2000 Minuten als unterer Grenzwert bei der Resistenz gegen Abflaggen.

Abrollkraft: Messung der Abrollkraft nach LV312 bei einer Abzugsgeschwindigkeit von 30 m/min.

K-Wert (nach FIKENTSCHER) (Messmethode A1):

Der K-Wert ist ein Maß für die durchschnittliche Molekülgröße hochpolymerer Stoffe. Zur Messung wurden einprozentige (1g/100 mL) toluolische Polymerlösungen herstellt und mit Hilfe eines VOGEL-OSSAG-Viskosimeters deren kinematische Viskositäten bestimmt. Nach Normierung auf die Viskosität des Toluols wird die relative Viskosität erhalten, aus der sich nach FIKENTSCHER der K-Wert errechnen lässt (*Polymer* **1967**, *8,* 381 ff.)

Gelpermeationschromatographie GPC (Messmethode A2):

Die Angaben des Zahlenmittels der Molmasse Mn, des gewichtsmittleren Molekulargewichtes $M_w$ und der Polydispersität PD in dieser Schrift beziehen sich auf die Bestimmung per Gelpermeationschromatographie. Die Bestimmung erfolgt an 100 μL klarfiltrierter Probe (Probenkonzentration 4 g/L). Als Eluent wird Tetrahydrofuran mit 0,1 Vol.-% Trifluoressigsäure eingesetzt. Die Messung erfolgt bei 25 °C. Als Vorsäule wird eine Säule Typ PSS-SDV, 5 μ, $10^3$ Å, ID 8,0 mm x 50 mm verwendet. Zur Auftrennung werden die Säulen des Typs PSS-SDV, 5 μ, $10^3$ Å sowie $10^5$ Å und $10^6$ Å mit jeweils ID 8,0 mm x 300 mm eingesetzt (Säulen der Firma Polymer Standards Service; Detektion mittels Differentialrefraktometer Shodex RI71). Die Durchflussmenge beträgt 1,0 mL pro Minute. Die Kalibrierung erfolgt gegen PMMA-Standards (Polymethylmethacrylat-Kalibrierung)].

SSZ -Scherstandzeit (Messmethode H2):

Ein 13 mm breiter und mehr als 20 mm (beispielsweise 30 mm) langer Streifen des Klebebandes wurde auf eine glatte Stahloberfläche, die dreimal mit Aceton und einmal mit Isopropanol gereinigt wurde, aufgebracht. Die Verklebungsfläche betrug 20 mm x 13 mm (Länge x Breite), wobei das Klebeband die Prüfplatte am Rand überragt (beispielsweise um 10 mm entsprechend oben angegebener Länge von 30 mm). Anschließend wurde das Klebeband viermal mit einem Anpressdruck entsprechend einem Gewicht von 2 kg auf den Stahlträger gedrückt. Diese Probe wurde senkrecht aufgehängt, so dass das überstehende Ende des Klebebandes nach unten zeigt.

Bei Raumtemperatur wurde ein Gewicht von 1 kg an dem überstehenden Ende des Klebebandes befestigt. Die Messung wird bei Normalklima (23 °C, 50 ± 5 % Luftfeuchtigkeit) und bei 70 °C in einem Wärmeschrank durchgeführt.

Die gemessenen Scherstandzeiten (Zeiten bis zum vollständigen Ablösen des Klebebandes vom Untergrund; Abbruch der Messung bei 10.000 min) sind in Minuten angegeben und entsprechen dem Mittelwert aus drei Messungen.

MSW - Mikroschertest (Messmethode H3)

Dieser Test dient der Schnellprüfung der Scherfestigkeit von Klebebändern unter Temperaturbelastung.

*Messprobenpräparation für Mikroschertest:* Ein aus dem jeweiligen Probenmuster geschnittenes Klebeband (Länge ca. 50 mm, Breite 10 mm) wird auf eine mit Aceton gereinigte Stahl-Prüfplatte verklebt, so dass die Stahlplatte das Klebeband rechts und links überragt und dass das Klebeband die Prüfplatte am oberen Rand um 2 mm überragt. Die Verklebungsfläche der Probe beträgt Höhe x Breite = 13mm x 10mm. Die Verklebungsstelle wird anschließend mit einer 2 kg-Stahlrolle und einer Geschwindigkeit von 10 m/min sechsmal überrollt. Das Klebeband wird bündig mit einem stabilen Klebestreifen verstärkt, der als Auflage für den Wegmessfühler dient. Die Probe wird mittels der Prüfplatte senkrecht aufgehängt.

*Mikroschertest:* Das zu messende Probenmuster wird am unteren Ende mit einem Gewicht von 100 g belastet. Die Prüftemperatur beträgt 40 °C, die Prüfdauer 30 Minuten (15 Minuten Belastung und 15 Minuten Entlastung). Die Scherstrecke nach der vorgegebenen Testdauer bei konstanter Temperatur wird als Ergebnis in μm angegeben, und zwar als Maximalwert ["max"; maximale Scherstrecke durch 15 minütige Belastung]; als Minimalwert ["min"; Scherstrecke ("Restauslenkung") 15 min nach Entlastung; bei Entlastung erfolgt eine Rückbewegung durch Relaxation]. Angegeben wird ebenfalls der elastische Anteil in Prozent ["elast"; elastischer Anteil (el. Anteil) = (max - min) x·100 / max].

Beispiele Haftkleber: Herstellung der Ausgangspolymere für die Beispiele B1 bis B8

Im Folgenden wird die Präparation der Ausgangspolymere beschrieben. Die untersuchten Polymere werden konventionell über eine freie radikalische Polymerisation in Lösung hergestellt.

Basispolymer P1: Ein für radikalische Polymerisationen konventioneller Reaktor wurde mit 30 kg 2-Ethylhexylacrylat, 67 kg n-Butylacrylat, 3 kg Acrylsäure und 66 kg Aceton/Isopropanol (96:4) befüllt. Nach 45 minütiger Durchleitung von Stickstoffgas unter Rühren wurde der Reaktor auf 58 °C hochgeheizt und 50 g 2,2'-Azobis(2-methylbutyronitril) hinzugegeben. Anschließend wurde das äußere Heizbad auf 75 °C erwärmt und die Reaktion konstant bei dieser Außentemperatur durchgeführt. Nach 1 h wurden erneut 50 g 2,2'-Azobis(2-methylbutyronitril) zugegeben und nach 4 h wurde mit 20 kg Aceton/Isopropanol-Gemisch (96:4) verdünnt.

Nach 5 sowie nach 7 h wurde jeweils mit 150 g Bis-(4-*tert*-butylcyclohexyl)-peroxydicarbonat nachinitiiert und mit 23 kg Aceton/Isopropanol-Gemisch (96:4) verdünnt. Nach 22 h Reaktionszeit wurde die Polymerisation abgebrochen und auf Raumtemperatur abgekühlt. Das Polyacrylat hat einen Umsatz von 99,6 %, einen K-Wert von 75,1, ein mittleres Molekulargewicht von $M_w$ = 1.480.000 g/mol, Polydispersität (PD) Q = ($M_w/M_n$) = 16,1.

Basispolymer P2: Analog Beispiel P1 wurden 68 kg 2-Ethylhexylacrylat, 25 kg Methylacrylat und 7 kg Acrylsäure in 66 kg Aceton/Isopropanol (94:6) polymerisiert. Initiiert wurde zweimal mit jeweils 50 g 2,2'-Azobis(2-methylbutyronitril), zweimal mit jeweils 150 g Bis-(4-*tert*-butylcyclohexyl)peroxydicarbonat und verdünnt mit 20 kg Aceton/Isopropanol-Gemisch (94:6). Nach 22 h Reaktionszeit wurde die Polymerisation abgebrochen und auf Raumtemperatur abgekühlt.

Das Polyacrylat hat einen Umsatz von 99,7 %, einen K-Wert von 51,3 und ein mittleres Molekulargewicht von $M_w$ = 676.000 g/mol, Polydispersität (PD) Q = ($M_w/M_n$) = 9,5.

Vergleichsbeispiele (VB) und erfinderische Beispiele (B) 1 bis 60: Die folgenden Beispiele und Vergleichsbeispiele weisen alle einen Masseauftrag von 50 g/$m^2$ auf einer 23 μm dicken geätzten PET-Folie auf.

**Tabelle 1a:** Klebtechnische Daten des Basispolymers P1 mit dem UV-Vernetzer Esacure KIP 150 (Oligo[2-hydroxy-2-methyl-1-[4-(1-methylvinyl)phenyl]propanon], CAS-Nr. 163702-01-0)

| Beispiel | Vernetzer | Konzentration | Dosis | SSZ RT | | MSW max. | el. Anteil | SAFT | | TFT |
|---|---|---|---|---|---|---|---|---|---|---|
| | | [Gew.-%] | [mJ/cm²] | [min] | Bruch | [μm] | [%] | [°C] | [μm] | [min] |
| VB1 | Esacure KIP 150 | 0,10 | 60 | < 10 | K | 890 | 23 | < 100 | - | 180 |
| VB2 | | | 80 | < 10 | K | 800 | 33 | < 100 | - | 260 |
| VB3 | | | 120 | < 10 | K | 740 | 38 | < 100 | - | 62 |
| B4 | | 0,25 | 60 | 16 | K | 406 | 50 | 123 | - | 1260 |
| B5 | | | 80 | 42 | M | 294 | 57 | 148 | - | 2800 |
| B6 | | | 120 | 177 | A | 228 | 66 | 173 | - | 2960 |
| B7 | | 0,50 | 60 | 17 | K | 234 | 58 | 149 | - | 4520 |
| B8 | | | 80 | 131 | M | 180 | 67 | 185 | - | 5030 |
| B9 | | | 120 | 102 | A | 101 | 74 | 186 | - | 5400 |
| VB10 | | 0,80 | 60 | 560 | M | 123 | 67 | 188 | - | 196 |
| VB11 | | | 80 | 760 | M | 98 | 85 | 196 | - | 251 |
| VB12 | | | 120 | 920 | M | 67 | 92 | 200 | 560 | 26 |

**Tabelle 2:** Klebtechnische Daten des Basispolymers P1 mit dem UV-Vernetzer Esacure KIP 160 (2-Hydroxy-1-{4-[4-(2-hydroxy-2-methyl-propionyl)-phenoxy]-phenyl}-2-methyl-propan-1-on, CAS-Nr. 71868-15-0)

| Beispiel | Vernetzer | Konzentration | Dosis | SSZ RT | | MSW max. | el. Anteil | SAFT | | TFT |
|---|---|---|---|---|---|---|---|---|---|---|
| | | [Gew.-%] | [mJ/cm²] | [min] | Bruch | [µm] | [%] | [°C] | [µm] | [min] |
| VB13 | Esacure KIP 160 | 0,10 | 60 | < 10 | K | 900 | 13 | < 100 | - | 80 |
| VB14 | | | 80 | < 10 | K | 820 | 23 | < 100 | - | 160 |
| VB15 | | | 120 | < 10 | K | 780 | 28 | < 100 | - | 62 |
| B16 | | 0,25 | 60 | 85 | M | 217 | 62 | 170 | - | 4805 |
| B17 | | | 80 | 125 | A | 187 | 63 | 179 | - | 4280 |
| B18 | | | 120 | 161 | A | 184 | 79 | 182 | - | 1620 |
| B19 | | 0,50 | 60 | 23 | M | 178 | 59 | 181 | - | 3895 |
| B20 | | | 80 | 50 | M | 146 | 51 | 189 | - | 4204 |
| B21 | | | 120 | 140 | A | 79 | 85 | 200 | 542 | 1510 |
| VB22 | | 0,80 | 60 | 660 | A | 120 | 67 | 188 | - | 96 |
| VB23 | | | 80 | 1760 | A | 88 | 86 | 199 | - | 51 |
| VB24 | | | 120 | 2920 | A | 62 | 94 | 200 | 460 | 26 |

**Tabelle 3:** Klebtechnische Daten des Basispolymers P1 mit dem UV-Vernetzer Esacure KT 55 (Mischung aus 50 Gew.-% Esacure KIP 150, 40 Gew.-% 2,4,6-Trimethylbenzophenon (CAS-Nr. 954-16-5) und 10 Gew.-% 4-Methylbenzophenon (CAS-Nr. 134-84-9))

| Beispiel | Vernetzer | Konzentration | Dosis | SSZ RT | | MSW max. | el. Anteil | SAFT | | TFT |
|---|---|---|---|---|---|---|---|---|---|---|
| | | [Gew.-%] | [mJ/cm²] | [min] | Bruch | [µm] | [%] | [°C] | [µm] | [min] |
| VB25 | Esacure KT 55 | 0,10 | 60 | < 10 | K | 780 | 26 | < 100 | - | 80 |
| VB26 | | | 80 | < 10 | K | 620 | 34 | < 100 | - | 78 |
| VB27 | | | 120 | < 10 | K | 600 | 38 | < 100 | - | 62 |
| B28 | | 0,25 | 60 | 14 | M | 221 | 58 | 154 | - | 805 |
| VB29 | | | 80 | 54 | M | 128 | 71 | 200 | 825 | 280 |
| VB30 | | | 120 | 45 | A | 56 | 83 | 200 | 332 | 62 |
| B31 | | 0,50 | 60 | < 10 | K | 394 | 28 | 107 | - | 1023 |
| VB32 | | | 80 | < 10 | M | 352 | 36 | 114 | - | 756 |
| VB33 | | | 120 | 17 | A | 106 | 64 | 200 | 569 | 152 |
| VB34 | | 0,80 | 60 | 160 | M | 120 | 67 | 188 | - | 196 |
| VB35 | | | 80 | 170 | A | 98 | 76 | 200 | 542 | 151 |
| VB36 | | | 120 | 172 | A | 92 | 77 | 200 | 457 | 26 |

**Tabelle 4:** Klebtechnische Daten des Basispolymers P2 mit dem UV-Vernetzer Esacure KIP 160 (2-Hydroxy-1-{4-[4-(2-hydroxy-2-methyl-propionyl)-phenoxy]-phenyl}-2-methyl-propan-1-on, CAS-Nr. 71868-15-0)

| Beispiel | Vernetzer | Konzentration | Dosis | SSZ RT | | MSW max. | el. Anteil | SAFT | | TFT |
|---|---|---|---|---|---|---|---|---|---|---|
| | | [Gew.-%] | [mJ/cm$^2$] | [min] | Bruch | [µm] | [%] | [°C] | [µm] | [min] |
| VB37 | Esacure KIP 160 | 0,10 | 60 | < 10 | K | 810 | 24 | < 100 | - | 120 |
| VB38 | | | 80 | < 10 | K | 720 | 27 | < 100 | - | 280 |
| VB39 | | | 120 | < 10 | K | 680 | 31 | < 100 | - | 162 |
| B40 | | 0,25 | 60 | 85 | M | 187 | 54 | 180 | - | 4608 |
| B41 | | | 80 | 115 | A | 126 | 62 | 189 | - | 5280 |
| B42 | | | 120 | 141 | A | 84 | 63 | 192 | - | 1620 |
| B43 | | 0,50 | 60 | 23 | M | 158 | 51 | 181 | - | 4895 |
| B44 | | | 80 | 54 | M | 116 | 59 | 189 | - | 4204 |
| B45 | | | 120 | 129 | A | 79 | 65 | 200 | 448 | 1120 |
| VB46 | | 0,80 | 60 | 260 | A | 120 | 67 | 188 | - | 96 |
| VB47 | | | 80 | 276 | A | 88 | 86 | 199 | - | 51 |
| VB48 | | | 120 | 292 | A | 62 | 94 | 200 | 360 | 26 |

**Tabelle 5:** Klebtechnische Daten des Basispolymers P1 mit dem UV-Vernetzer Esacure 1001 M (1-[4-(4-Benzoylphenylsulfanyl)-phenyl]-2-methyl-2-(4-methylphenylsulfonyl)-propan-1-on,)

| Beispiel | Vernetzer | Konzentration | Dosis | SSZ RT | | MSW max. | el. Anteil | SAFT | | TFT |
|---|---|---|---|---|---|---|---|---|---|---|
| | | [Gew.-%] | [mJ/cm$^2$] | [min] | Bruch | [µm] | [%] | [°C] | [µm] | [min] |
| VB49 | Esacure 1001 M | 0,10 | 60 | < 10 | K | > 2000 | - | < 100 | - | < 10 |
| VB50 | | | 80 | < 10 | K | > 2000 | - | < 100 | - | < 10 |
| VB51 | | | 120 | < 10 | K | > 2000 | - | < 100 | - | < 10 |
| VB52 | | 0,25 | 60 | < 10 | K | > 2000 | - | < 100 | - | < 10 |
| VB53 | | | 80 | < 10 | K | > 2000 | - | < 100 | - | < 10 |
| VB54 | | | 120 | < 10 | K | > 2000 | - | < 100 | - | < 10 |
| VB55 | | 0,50 | 60 | < 10 | K | > 2000 | - | < 100 | - | < 10 |
| VB56 | | | 80 | < 10 | K | > 2000 | - | < 100 | - | < 10 |
| VB57 | | | 120 | < 10 | K | > 2000 | - | < 100 | - | < 10 |
| VB58 | | 0,80 | 60 | < 10 | K | > 2000 | - | < 100 | - | < 10 |
| VB59 | | | 80 | < 10 | K | > 2000 | - | < 100 | - | < 10 |
| VB60 | | | 120 | < 10 | K | > 2000 | - | < 100 | - | < 10 |

Der UV-Vernetzer Esacure 1001 M ((1-[4-(4-Benzoylphenylsulfanyl)-phenyl]-2-methyl-2-(4-methylphenylsulfonyl)-propan-1-on,CAS-Nr. 272460-97-6) eignet sich nicht zur Vernetzung der Acrylat-basierten Haftklebemassen.

**Tabelle 6:** tan δ-Werte der Beispiele und Vergleichsbeispiele 1 bis 60 gemessen mittels Dynamisch Mechanische Analyse (Frequenzsweep) bei ω = 0,1 rad/s und 25°C

| Beispiel | tan δ[1] | Beispiel | tan δ[1] | Beispiel | tan δ[1] | Beispiel | tan δ[1] |
|---|---|---|---|---|---|---|---|
| VB1 | 0,62 | B16 | 0,49 | B31 | 0,47 | VB46 | 0,44 |
| VB2 | 0,61 | B17 | 0,47 | VB32 | 0,44 | VB47 | 0,42 |
| VB3 | 0,60 | B18 | 0,45 | VB33 | 0,42 | VB48 | 0,42 |
| B4 | 0,50 | B19 | 0,48 | VB34 | 0,44 | VB49 | 0,65 |
| B5 | 0,49 | B20 | 0,46 | VB35 | 0,43 | VB50 | 0,64 |
| B6 | 0,49 | B21 | 0,45 | VB36 | 0,42 | VB51 | 0,63 |
| B7 | 0,49 | VB22 | 0,44 | VB37 | 0,54 | VB52 | 0,63 |
| B8 | 0,48 | VB23 | 0,42 | VB38 | 0,54 | VB53 | 0,62 |
| B9 | 0,47 | VB24 | 0,41 | VB39 | 0,53 | VB54 | 0,61 |
| VB10 | 0,44 | VB25 | 0,53 | B40 | 0,50 | VB55 | 0,59 |
| VB11 | 0,44 | VB26 | 0,52 | B41 | 0,48 | VB56 | 0,57 |
| VB12 | 0,43 | VB27 | 0,51 | B42 | 0,46 | VB57 | 0,56 |
| VB13 | 0,58 | B28 | 0,46 | B43 | 0,49 | VB58 | 0,56 |
| VB14 | 0,56 | VB29 | 0,44 | B44 | 0,47 | VB59 | 0,55 |
| VB15 | 0,52 | VB30 | 0,43 | B45 | 0,45 | VB60 | 0,53 |
| [1] = gemessen mittels Dynamisch Mechanischer Analyse (Frequenzsweep) bei 25°C und ω = 0,1 rad/s, Stress 2500 Pa | | | | | | | |

Überraschend und dem Fachmann nicht offensichtlich, lassen sich durch Photoninitiatoren (= UV-Vernetzer) mit mindestens zwei photoaktiven Gruppen pro Molekül Klebemassen mit guten Flagging-Eigenschaften (messbar durch den TFT-Test) erhalten, wenn ein ausgeglichenes Verhältnis zwischen Kohäsion und Adhäsion eingestellt wird. Dies zeigt sich insbesondere an den rheologischen Eigenschaften und zwar dem tan δ (der Quotient aus G" und G', also dem Verhältnis aus Verlust- und Speichermodul), der bei einer Messfrequenz von 0,1 rad/s (entspricht ungefähr der Zeitskala des Flaggingvorgangs) besonders bevorzugt Werte zwischen $0,45 \leq \tan \delta \leq 0,50$ einnimmt (siehe Tabelle 6). Die vorgenannten Haftmittel sind besonders gut zur Verklebung zylindrischer Flächen geeignet.

## Patentansprüche

1. Klebemasse umfassend Polymerisationsprodukte von Acrylaten, wobei die Klebemasse schmelzbar ist, **dadurch gekennzeichnet, dass** sie mindestens ein Polymerisationsprodukt umfasst, das aufgebaut ist aus

   a) 75 bis 99,9 Gew.-% Ester der (Meth-)acrylsäure der allgemeinen Formel I,

   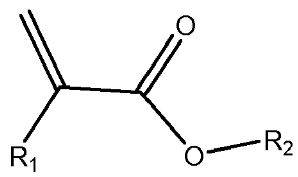

   (I)

   wobei $R_1$ = H oder $CH_3$ und $R_2$ eine lineare, verzweigte oder cyclische Alkylkette mit 2 bis 20 C-Atomen ist,
   b) 0,1 bis 25 Gew.-% (Meth-)acrylsäure der Formel II,

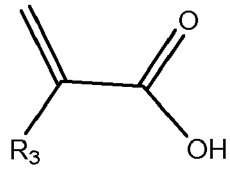
(II)

wobei $R^3$ = H oder $CH_3$ ist,

und die Summe aller eingesetzten Komponenten 100 Gew.-% des Polymerisationsproduktes ergibt, wobei das Molekulargewicht des Polymerisationsproduktes Mn größer 50.000 g/Mol und Mw größer 500.000 g/Mol sind.

**2.** Klebemasse nach Anspruch 1,
**dadurch gekennzeichnet, dass**
sie zusätzlich umfasst

c) olefinisch ungesättigte Monomere mit funktionellen Gruppen und/oder
d) olefinisch ungesättigte Monomere, die insbesondere mit der Komponente (a) und/oder (b) copolymerisierbar sind.

**3.** Klebemasse nach Anspruch 1, **dadurch gekennzeichnet, dass** das Polymerisationsprodukt eine statische Glasübergangtemperatur ($T_G$) von kleiner gleich 0 °C aufweist.

**4.** Klebemasse nach einem der Ansprüche 1 bis 3, **dadurch gekennzeichnet, dass** das Polymerisationsprodukt umfasst

a) 80 bis 99,9 Gew.-% Ester der (Meth-)acrylsäure der allgemeinen Formel I,
(b) 0,1 bis 20 Gew.-% (Meth-)acrylsäure der Formel II
(c) 0 bis 10 Gew.-% olefinisch ungesättigte Monomere mit funktionellen Gruppen
(d) 0 bis 10 Gew.-% olefinisch ungesättigte Monomere,

wobei die Summe aller eingesetzten Komponenten 100 Gew.-% ergibt.

**5.** Klebemasse nach einem der Ansprüche 1 bis 4, **dadurch gekennzeichnet, dass** das Polymerisationsprodukt eine Restmonomergehalt von kleiner gleich 1 Gew.-% in Bezug auf die Gesamtzusammensetzung der Klebemasse aufweist.

**6.** Klebemasse nach einem der Ansprüche 1 bis 5, **dadurch gekennzeichnet, dass** der K-Wert größer gleich 40 ist.

**7.** Klebemasse nach einem der Ansprüche 1 bis 6, **dadurch gekennzeichnet, dass** die Polydispersität Q des Polymerisationsproduktes Q = Mw/Mn größer gleich 5 ist.

**8.** Haftklebemasse **dadurch gekennzeichnet, dass**
die Haftklebemasse UV-vernetzbar und schmelzbar ist und

a) eine Klebemasse nach einem der Ansprüche 1 bis 7, und
b) mindestens einen Photoinitiator ausgewählt aus α-Spaltern, BenzophenonDerivaten und Thioxanthon-Derivate aufweist.

**9.** Haftklebemasse nach Anspruch 8, **dadurch gekennzeichnet, dass** der α-Spalter ausgewählt ist aus α-Hydroxyketonen und Derivaten davon.

**10.** Haftklebemasse nach Anspruch 8 oder 9, **dadurch gekennzeichnet, dass**

a) der α-Spalter ausgewählt ist aus Oligo[2-hydroxy-2-methyl-1-[4-(1-methylvinyl)phenyl]propanon], 2-Hydroxy-1-{4-[4-(2-hydroxy-2-methyl-propionyl)-phenoxy]-phenyl}-2-methyl-propan-1-on, 2,4,6-Trimethylbenzophenon sowie Gemischen umfassend mindestens zwei der vorgenannten α-Spalter.

**11.** Haftklebemasse nach einem der Ansprüche 8 bis 10, **dadurch gekennzeichnet, dass** der Gehalt an mindestens einem Photoinitiator, insbesondere an α-Spalter, in der Gesamtzusammensetzung der Klebemasse 0,25 bis 0,75 Gew.-% beträgt.

**12.** Verfahren zur Herstellung der Haftklebemasse nach einem der Ansprüche 8 bis 11, indem

(i) eine Klebemasse umfassend mindestens ein Polymerisationsprodukt, das aufgebaut ist aus

(a) 75 bis 99,9 Gew.-% Ester der (Meth-)acrylsäure der allgemeinen Formel I,

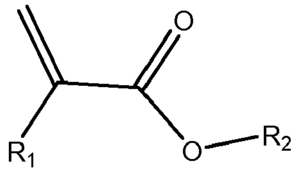
(I)

wobei $R^1$ = H oder $CH_3$ und $R^2$ eine Alkylkette mit 2 bis 20 C-Atomen ist, und
b) 0,1 bis 25 Gew.-% (Meth-)acrylsäure der Formel II,

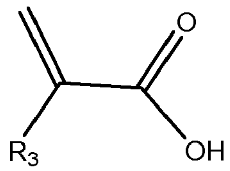
(II)

wobei $R^3$ = H oder $CH_3$ ist,

und die Summe aller eingesetzten Komponenten 100 Gew.-% des Polymerisationsproduktes ergibt, wobei das Molekulargewicht des Polymerisationsproduktes Mn größer 50.000 g/Mol ist und Mw größer 500.000 g/Mol ist, mit
(ii) mindestens einem Photoinitiator ausgewählt aus α-Spaltern und BenzophenonDerivaten gemischt wird.

**13.** Haftklebemasse erhältlich nach einem Verfahren nach Anspruch 12.

**14.** Verwendung einer Haftklebemasse nach einem der Ansprüche 8 bis 11 und 13 sowie erhalten nach Anspruch 12 zum Herstellen eines Haftmittels, einer Transferklebemasse, eines Transferklebebands, eines beschichteten Trägers, eines Klebebandes,
indem die schmelzbare Haftklebemasse als Schmelze, insbesondere im Temperaturbereich von 60 bis 200 °C

- mit einem Masseauftrag von 20 bis 250 g/cm$^3$ ausgetragen wird und erhalten einer Schicht, optional wird die Schicht auf einen Träger oder einen Transferträger aufgetragen,
- die Schicht wird mit einer energiereichen Strahlung vernetzt.

**15.** Verwendung nach Anspruch 14, wobei der Masseauftrag in Form einer gleichförmigen Schicht einer Schichtdicke von 2 bis 200 μm erfolgt, optional wird die Schicht auf einen Träger oder einen Transferträger aufgetragen.

**16.** Verwendung nach Anspruch 14 oder 15, wobei der Masseauftrag auf einen Träger oder einen Transferträger erfolgt, der ausgewählt ist aus Gewebe, Vlies, Folie und Papier.

**17.** Haftmittel erhältlich nach Anspruch 14 oder 15.

**18.** Haftmittel nach Anspruch 17, **dadurch gekennzeichnet, dass** der TFT-Wert (Threshold Flagging Time) in Minuten größer gleich 1000 Minuten beträgt.

**19.** Haftmittel nach Anspruch 17 oder 18, **dadurch gekennzeichnet, dass** der tan δ Wert, der Quotient aus G" und G',

der dem Verhältnis aus Verlust- und Speichermodul entspricht, bei einer Messfrequenz von 0,1 rad/s zwischen 0,45 $\leq \tan \delta \leq 0{,}50$ liegt.

**20.** Haftmittel nach Anspruch 18 oder 19, **dadurch gekennzeichnet, dass** es eine Scherstandzeit (SSZ) von größer gleich 100 Minuten aufweist, bei einem Normalklima (23 °C, 55 % Luftfeuchtigkeit), wobei die Scherstandzeit in Minuten als Zeit bis zum vollständigen Ablösen des Klebebandes vom Untergrund gemessen wird.

**21.** Haftmittel nach einem der Ansprüche 17 bis 20 in Form eines flächigen Haftmittels oder in Form eines mit einer UV-vernetzten Haftklebemasse nach einem der Ansprüche 14 bis 16 beschichteten Trägers oder einen Transferträger, insbesondere ein mit einer UV-vernetzbaren oder UV-vernetzten Haftklebemasse nach einem der Ansprüche 8 bis 11 oder 13 beschichteter Träger oder Transferträger, wobei das Haftmittel ein flächiges Haftmittel ist, ausgewählt aus einem Etikett, Klebeband, Kabelwickelband oder einer Schutzfolie oder einer flächigen Transferklebemasse oder einem Transferklebeband.

**22.** Flächiges Haftmittel nach Anspruch 20, **dadurch gekennzeichnet, dass** es ein Klebeband ist, insbesondere zum Umwickeln von Kabeln, umfassend einen Träger, vorzugsweise einen textilen Träger.

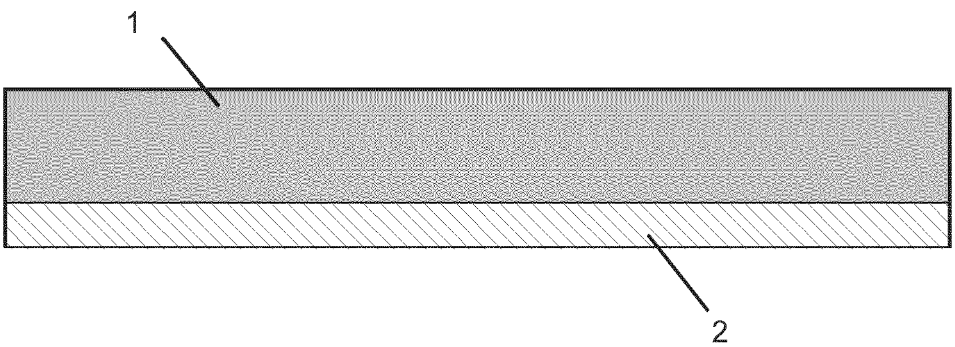


Fig. 1

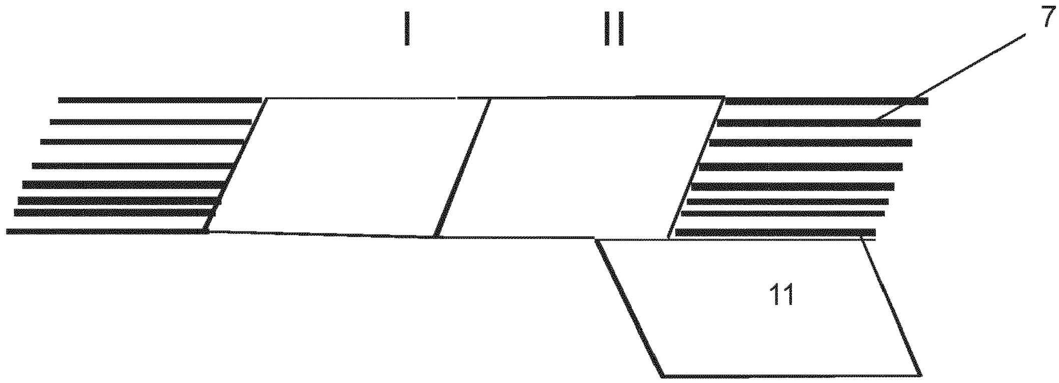


Fig. 2

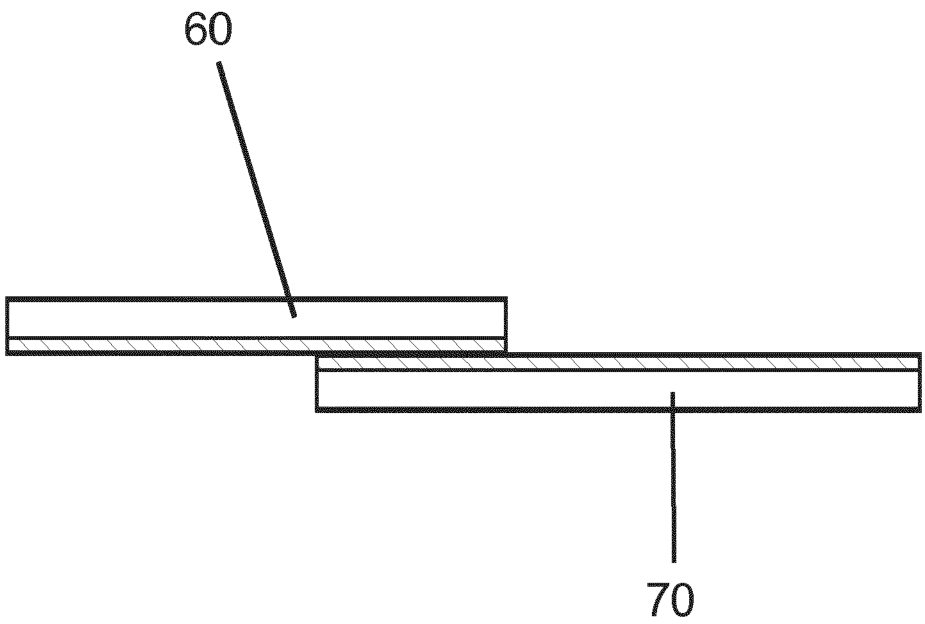


Fig. 3

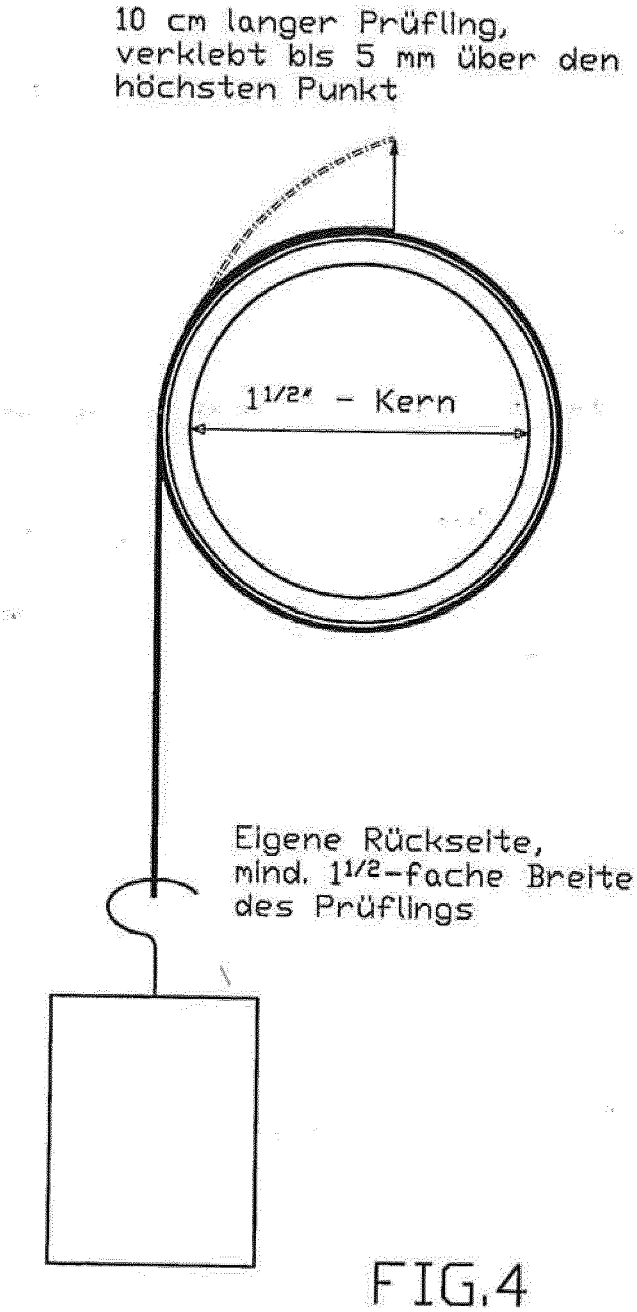
10 cm langer Prüfling,
verklebt bis 5 mm über den
höchsten Punkt
1 1/2" - Kern
Eigene Rückseite,
mind. 1 1/2-fache Breite
des Prüflings

FIG.4

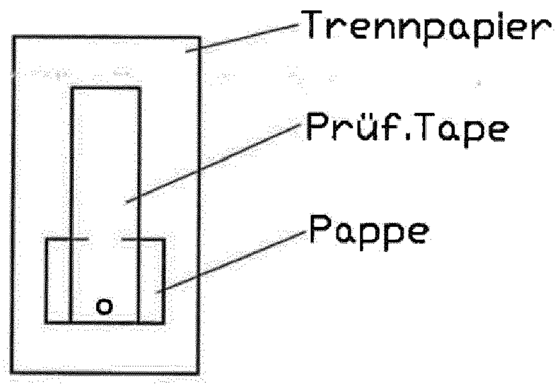


FIG.5

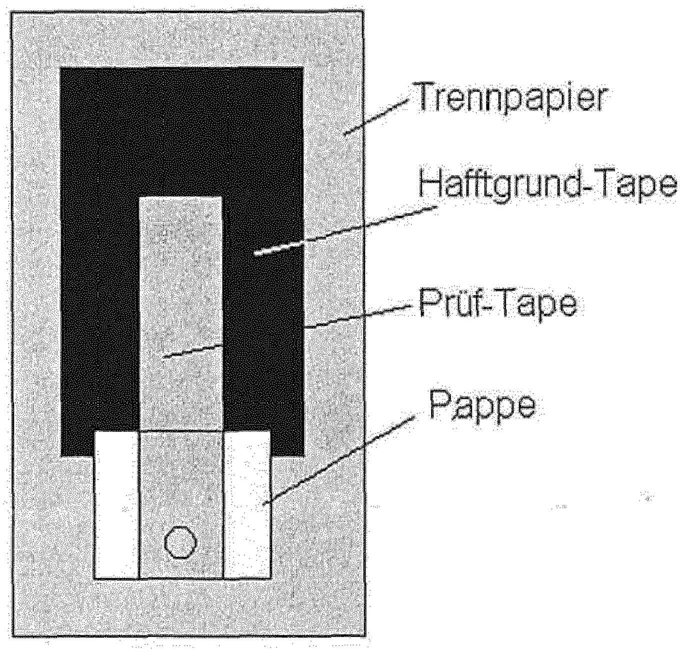


Fig. 6

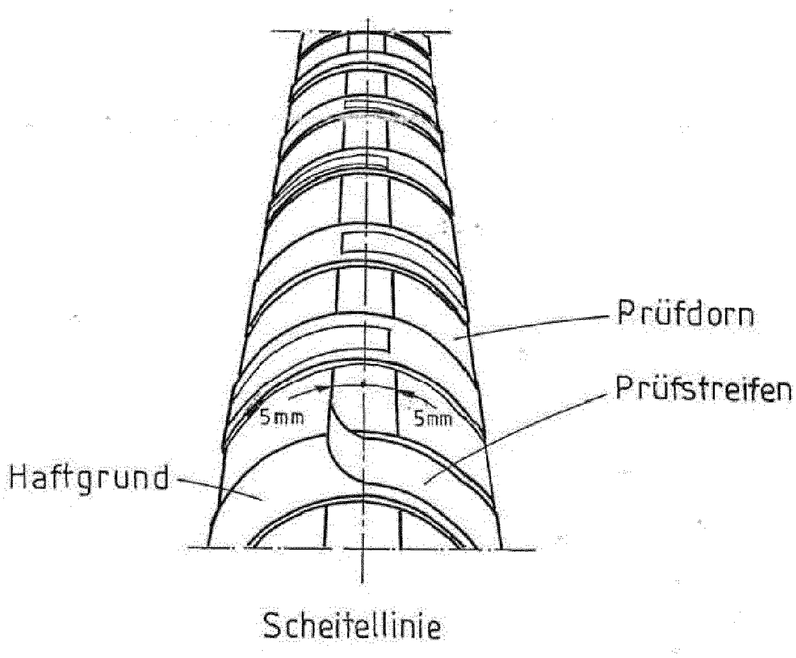


FIG.7

Europäisches Patentamt
European Patent Office
Office européen des brevets

# EUROPÄISCHER RECHERCHENBERICHT

Nummer der Anmeldung
EP 15 16 2391

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2004 002279 A1 (TESA AG [DE]) 4. August 2005 (2005-08-04)<br>* Beispiele 1-4 * | 1,2,4,5, 7-22 | INV.<br>C09D133/02<br>C09J7/02<br>C09J133/02 |
| X | EP 2 143 773 A1 (TESA SE [DE]) 13. Januar 2010 (2010-01-13)<br>* Beispiele P3, B1-B9 * | 1-22 | |
| X,D | WO 02/28963 A2 (TESA AG [DE]; CARTELLIERI ULF [DE]; HUSEMANN MARC [DE]; RING CHRISTIAN) 11. April 2002 (2002-04-11)<br>* Seite 9, Zeile 16; Beispiel I6 * | 1,2,4,5, 7-22 | |

RECHERCHIERTE SACHGEBIETE (IPC)
C09D
C09J
C08L

Der vorliegende Recherchenbericht wurde für alle Patentansprüche erstellt

1

| Recherchenort | Abschlußdatum der Recherche | Prüfer |
|---|---|---|
| Den Haag | 4. September 2015 | Schmidt, Helmut |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 15 16 2391

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

04-09-2015

| Im Recherchenbericht angeführtes Patentdokument | Datum der Veröffentlichung | Mitglied(er) der Patentfamilie | Datum der Veröffentlichung |
|---|---|---|---|
| DE 102004002279 A1 | 04-08-2005 | AU 2005205192 A1 | 28-07-2005 |
| | | BR PI0506908 A | 29-05-2007 |
| | | CA 2546822 A1 | 28-07-2005 |
| | | CN 1910247 A | 07-02-2007 |
| | | DE 102004002279 A1 | 04-08-2005 |
| | | EP 1709133 A1 | 11-10-2006 |
| | | JP 2007518855 A | 12-07-2007 |
| | | TW 200540241 A | 16-12-2005 |
| | | US 2008286485 A1 | 20-11-2008 |
| | | WO 2005068575 A1 | 28-07-2005 |
| EP 2143773 A1 | 13-01-2010 | AT 507274 T | 15-05-2011 |
| | | DE 102008032571 A1 | 14-01-2010 |
| | | EP 2143773 A1 | 13-01-2010 |
| | | ES 2362642 T3 | 08-07-2011 |
| | | US 2010010112 A1 | 14-01-2010 |
| | | US 2015148444 A1 | 28-05-2015 |
| WO 0228963 A2 | 11-04-2002 | DE 10049669 A1 | 11-04-2002 |
| | | EP 1370590 A2 | 17-12-2003 |
| | | ES 2273906 T3 | 16-05-2007 |
| | | JP 2004510866 A | 08-04-2004 |
| | | US 2004048944 A1 | 11-03-2004 |
| | | WO 0228963 A2 | 11-04-2002 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 1548080 A1
- EP 1370590 B1
- WO 0228963 A2
- EP 1370590 B


### In der Beschreibung aufgeführte Nicht-Patentliteratur


- *Schutzsysteme für Leitungssätze in Kraftfahrzeugen, Klebebänder; Prüfrichtlinie,* Oktober 2009
- **T.G. FOX.** *Bull. Am. Phys. Soc.,* 1956, vol. 1, 123